# EUROPEAN PATENT APPLICATION

(11) **EP 4 517 304 A1**
(43) Date of publication of application: **05.03.2025**
(21) Application number: 23795339.3
(22) Date of filing: 24.04.2023
(51) Int. Cl.: G01N 21/64, G01N 15/06, G01N 33/53

(54) **BLOOD CELL ANALYZER FOR DETECTING ARCHAEOCYTE AND DETECTION METHOD**

(30) Priority: 25.04.2022 CN 202210442573
(71) Applicant: Shenzhen Mindray Bio-Medical Electronics Co., Ltd., Shenzhen, Guangdong 518057 (CN)
(72) Inventor: LI, Jin, Shenzhen, Guangdong 518057 (CN); QIN, Zheyuan, Shenzhen, Guangdong 518057 (CN); CHEN, Gengwen, Shenzhen, Guangdong 518057 (CN); YAO, Donglan, Shenzhen, Guangdong 518057 (CN)
(74) Representative: KIPA AB
(86) International application number: PCT/CN2023/090310
(87) International publication number: WO 2023/207906

(57) **Abstract**

A blood analyzer and a detection method for detecting blasts. The blood analyzer comprises: a sample aspiration device (100) configured to aspirate at least part of a sample as a first sub-sample and conveying the same to a mixing chamber (200, 210); a reagent supply device (600, 700) configured to provide a reagent to the mixing chamber (200, 210); the mixing chamber (200, 210) configured to mix the first sub-sample with a first reagent comprising a first hemolytic agent and a second reagent comprising a fluorescently labeled antibody; a light source configured to align a light beam with a detection hole of an optical flow chamber (310) communicated with the mixing chamber (200, 210); an optical detector configured to detect a light scattering signal comprising a first side scatter intensity signal of particles passing through the detection hole and a fluorescent signal comprising an antibody fluorescence intensity signal; and a processor operably connected to the optical detector and configured to obtain particle information in the first sub-sample based on the first side scatter intensity signal and the antibody fluorescence intensity signal, the particle information in the first sub-sample comprising blast information.

## Description

### TECHNICAL FIELD

The disclosure relates to the field of *in vitro* diagnostics, and in particular to a blood analyzer for testing blasts and a testing method.

### BACKGROUND

Blasts are not typically found in the peripheral blood of healthy people. The presence of blasts in peripheral blood usually indicates hematological system diseases, including acute and chronic leukemia, myelodysplastic syndrome, etc. According to the morphological characteristics of blasts, acute leukemia is divided into two main types, acute lymphocytic leukemia and acute myeloid leukemia, and different subtypes. Although the current gold standard for clinical diagnosis and efficacy evaluation is still based on bone marrow examination using the MICM (morphology, immunology, cytogenetics and molecular biology) model of diagnosis and treatment, the testing of blasts in peripheral blood is still of great significance due to the convenience and high patient acceptance of peripheral blood sampling.

For example, studies have shown that if the number of blasts in peripheral blood is more than 2000 cells/µL during the diagnosis of acute myeloid leukemia (AML), a peripheral blood examination can be used as a means for clinical diagnosis and treatment evaluation of AML. For another example, the clearance rate of blasts in peripheral blood after induction chemotherapy and the level of residual leukemia cells in peripheral blood after chemotherapy in a patient are closely associated with the drug sensitivity and efficacy in the patient. During the first induction chemotherapy for AML patients, a number ratio of blasts during it to blasts at the onset in the peripheral blood can be continuously monitored for 1-7 days. The number of days required for the ratio to reach 0.1 is an independent prognostic factor for AML. In addition, another study has reported that rapid clearance (≤ 6 days) of blasts in peripheral blood can be used to accurately predict the leukemia cell clearance rate in bone marrow on day 14 of induction chemotherapy and the complete alleviation after induction chemotherapy, and can serve as a good prognostic factor for efficacy and survival evaluation of AML. Therefore, the testing of blasts in peripheral blood can also bring significant value to the diagnosis and treatment of leukemia. According to the MRD detection guidelines published by ELN in 2018, continuous monitoring of the condition during treatment and close monitoring of recurrence after completion of the treatment can be achieved via the testing of blasts in peripheral blood.

Currently, there are three methods for testing blasts in peripheral blood, i.e., a blood analyzer-based method, a microscopy-based method and a flow cytometer-based method.

The blood analyzer-based method is currently used for screening in clinical laboratories and involves, based on the blast alarm rules of the International Consensus Group for Hematology Review, triggering a screening by artificial microscopy and then confirming the presence of blasts. Therefore, although the blood analyzer-based method is fast, efficient and easy to operate, it is still unable to accurately identify and quantify blasts and can only provide suspicious alarms, which lead to a relatively high false negative rate and a relatively high false positive rate.

The microscopy-based method relies on artificial or software observation of blood smears under a microscope and is the industry-recognized reference method for performing categorization and count on blasts. However, the number of cells that can be tested by the microscopy-based method is only 100-200 cells/person. Therefore, the quality and level of the testing results are affected by specimen collection, smears, staining, etc., and it is difficult to significantly improve the precision of testing and the sensitivity of testing of blasts.

The flow cytometer-based method relies on a flow cytometry technique and involves using a variety of monoclonal antibodies to perform categorization and count on leukocytes and other blood cells based on differences in the surface antigen expression on the cells. Therefore, the flow cytometer-based method avoids the subjective errors introduced by artificial microscopy, significantly increases the statistical quantity, and is expected to become a more accurate and efficient method. However, the flow cytometer-based method is expensive and involves cumbersome and complicated operations. Around 2016, the International Council for Standardization in Hematology (ICSH) organized five reference laboratories to explore the flow cytometer-based method, and performed categorizations and counts on various subtypes of leukocytes, immature granulocytes, blasts and nucleated erythrocytes in peripheral blood, which required the simultaneous use of eight monoclonal antibodies. Since the surface antigens of blasts are non-specific, the testing of blasts relies on the exclusion method.

Therefore, there is a need for a method for testing blasts in peripheral blood that is easy to operate and low in cost.

### SUMMARY

A first object of the disclosure is to provide a blood analyzer for testing blasts and a method for testing blasts. The blood analyzer and the method can quickly and accurately analyze blasts in peripheral blood and enable counting of them without affecting the categorizing and counting of various other types of cells in peripheral blood samples.

To this end, a first aspect of the disclosure provides a blood analyzer, including a sample aspiration device, a reagent supply device, a mixing chamber, a light source, an optical flow cell, an optical detector, a processor, and a non-transitory computer-readable storage medium programmed with a computer application program.

The sample aspiration device is configured to aspirate a sample and transfer at least part of the aspirated sample as a first sub-sample to the mixing chamber.

The reagent supply device is configured to provide a reagent and transfer the reagent to the mixing chamber, the reagent including a first type of reagents.

The mixing chamber is configured to mix the first sub-sample with the first type of reagents to form a first sample to be tested, wherein the first type of reagents includes a first reagent and a second reagent, the first reagent includes a first hemolytic agent, the second reagent includes a fluorescently labeled antibody, and the antibody is capable of binding to an antigen on a surface of a blast.

The light source is configured to align a light beam to a detection hole of the optical flow cell that is communicated with the mixing chamber.

The optical detector is configured to detect a scatter signal and a fluorescence signal of the first sample to be tested that passes through the detection hole, the scatter signal including a first side scatter intensity signal from the first sample to be tested, and the fluorescence signal including an antibody fluorescence intensity signal from the fluorescently labeled antibody.

The processor is operably connected to the optical detector, and when the computer application program in the non-transitory computer readable storage medium is executed by the processor, the processor controls a time for mixing the first hemolytic agent with the first sub-sample in the mixing chamber to be no more than 2 minutes, and the processor obtains particle information of the first sub-sample based on the first side scatter intensity signal and the antibody fluorescence intensity signal, the particle information of the first sub-sample including blast information.

According to some embodiments, the first type of reagents further includes a third reagent including a first fluorescent dye; the scatter signal further includes a first fluorescence signal from the first fluorescent dye; when the computer application program is executed by the processor, the processor further obtains particle information of the first sub-sample based on the first side scatter intensity signal and the first fluorescence intensity signal, in which the particle information of the first sub-sample includes neutrophil information, monocyte information, lymphocyte information and eosinophil information.

According to some embodiments, when the computer application program is executed by the processor, when the blast information indicates that the sample contains no blasts, the processor further obtains respective count of neutrophils, eosinophils, monocytes, and lymphocytes, and optionally obtains immature granulocyte information and/or atypical lymphocyte information, based on the particle information of the first sub-sample; alternatively, when the blast information indicates that the sample contains blasts, the processor deducts the effect of the blasts from the particle information of the first sub-sample so as to obtain respective count of neutrophils, eosinophils, monocytes, and lymphocytes, and optionally obtains immature granulocyte information and/or atypical lymphocyte information, based on the obtained blast information.

According to some other embodiments, the sample aspiration device is further configured to sequentially transfers at least part of the aspirated sample as a second sub-sample and a third sub-sample to the mixing chamber; the reagent further includes a second type of reagents including a third reagent, a fourth reagent, a fifth reagent and a sixth reagent; the mixing chamber is further configured to mix the second sub-sample with the third reagent and the fourth reagent to obtain a second sample to be tested, and mix the third sub-sample with the fifth reagent and the sixth reagent to obtain a third sample to be tested, respectively, wherein the third reagent includes a first fluorescent dye, the fourth reagent includes a second hemolytic agent, the fifth reagent includes a second fluorescent dye, the sixth reagent includes a third hemolytic agent, the second hemolytic agent is same as or different from the first hemolytic agent, the third hemolytic agent is different from either of the first and second hemolytic agents, and the second fluorescent dye is different from the first fluorescent dye; the optical detector is further configured to detect respective scatter signal and respective fluorescence signal of the second and third samples to be tested that respectively pass through the detection hole; the respective scatter signal includes a second side scatter intensity signal from the second sample to be tested and a third side scatter intensity signal from the third sample to be tested; the respective fluorescence signal includes a second fluorescence intensity signal from the first fluorescent dye of the second sample to be tested and a third fluorescence intensity signal from the second fluorescent dye of the third sample to be tested. When the computer application program is executed by the processor, the processor further obtains particle information of the second sub-sample based on the second side scatter intensity signal and the second fluorescence intensity signal of the second sample to be tested, and particle information of the third sub-sample based on the third side scatter intensity signal and the third fluorescence intensity signal of the third sample to be tested, wherein the particle information of the second sub-sample includes neutrophil information, monocyte information, lymphocyte information, and eosinophil information, and the particle information of the third sub-sample includes lymphocyte information, basophil information, and nucleated erythrocyte information. When the computer application program is executed by the processor, the processor further obtains respective count of neutrophils, eosinophils, monocytes, and lymphocytes, and optionally obtains immature granulocyte information and atypical lymphocyte information, based on the particle information of the second sub-sample, when the blast information indicates that the sample contains no blasts; alternatively, the processor eliminates the effect of the blast information on the particle information of the second sub-sample by combining the blast information with the lymphocyte information from the particle information of the third sub-sample so as to obtain respective count of neutrophils, eosinophils, monocytes, and lymphocytes, and optionally obtains immature granulocyte information and atypical lymphocyte information, based on the particle information of the second sub-sample, when the blast information indicates that the sample contains blasts.

In different embodiments of the disclosure, the third reagent is included in the first type of reagents or the second type of reagents.

According to an embodiment of the disclosure, when the computer application program is executed by the processor, the processor counts the blasts.

According to an embodiment of the disclosure, when the computer application program is executed by the processor, the processor further alarms the presence of blasts in the sample, or alarms the presence of blasts in the sample and outputs a count of blasts, when the blast information indicates that the sample contains blasts.

According to an embodiment of the disclosure, the scatter signal further includes a first forward scatter signal from the first sample to be tested, and when the computer application program is executed by the processor, the processor further determines that the blasts are lymph blasts and/or myeloid blasts based on the first forward scatter intensity signal and the antibody fluorescence intensity signal.

According to another embodiment of the disclosure, the scatter signal further includes a first forward scatter signal from the first sample to be tested, and when the computer application program is executed by the processor, the processor further alarms the presence of lymph blasts and/or myeloid blasts in the sample based on the first forward scatter intensity signal and the antibody fluorescence intensity signal.

According to yet another embodiment of the disclosure, when the computer application program is executed by the processor, the processor further obtains leukocyte information of the sample based on the first side scatter intensity signal and the antibody fluorescence intensity signal, the leukocyte information including information of lymphocytes, monocytes, neutrophils and eosinophils.

The blood analyzer of the disclosure further includes a hemoglobin testing unit and/or an impedance counting detection unit.

A second aspect of the disclosure provides a sample analysis method. The method includes receiving an operation instruction to perform a blast testing on a sample.

The blast testing includes operations as follows.

Aspiration of a sample includes aspirating at least part of the sample as a first sub-sample.

Processing the sample includes mixing the first sub-sample with a first type of reagents to obtain a first sample to be tested, in which the first type of reagents includes a first reagent including a first hemolytic agent which is mixed with the first sub-sample for no more than 2 minutes, and a second reagent including a fluorescently labeled antibody, the antibody being capable of binding to an antigen of a surface of a blast.

Detecting the sample to be tested includes passing particles in the first sample to be tested through a detection region of an optical detection device one by one and irradiating the particles in the first sample to be tested using a light source of the optical detection device, to obtain a scatter signal and a fluorescence signal of the first sample to be tested, the scatter signal including a first side scatter intensity signal from the first sample to be tested, and the fluorescence signal including an antibody fluorescence intensity signal from the fluorescently labeled antibody.

Obtaining particle information includes obtaining particle information of the first sub-sample based on the first side scatter intensity signal and the antibody fluorescence intensity signal, the particle information of the first sub-sample including blast information.

According to some embodiments, the first type of reagents further includes a third reagent including a first fluorescent dye, and the scatter signal further includes a first fluorescence signal from the first fluorescent dye in the first sample to be tested; and the blast testing further includes: obtaining particle information of the first sub-sample based on the first side scatter intensity signal and the first fluorescence intensity signal, in which the particle information of the first sub-sample includes neutrophil information, monocyte information, lymphocyte information and eosinophil information.

According to some embodiments, the blast testing further includes: when the blast information indicates that the sample contains no blasts, obtaining respective count of neutrophils, eosinophils, monocytes, and lymphocytes, and optionally obtaining immature granulocyte information and/or atypical lymphocyte information, based on the particle information of the first sub-sample; alternatively, when the blast information indicates that the sample contains blasts, deducting the effect of the blasts from the particle information of the first sub-sample so as to obtain respective count of neutrophils, eosinophils, monocytes, and lymphocytes, and optionally obtaining immature granulocyte information and/or atypical lymphocyte information.

According to some other embodiments, in the blast testing, aspirating the sample further includes aspirating at least part of the sample as a second sub-sample and a third sub-sample; processing the sample further includes processing the second and third sub-samples with a second type of reagents, in which the second type of reagents include a third reagent, a fourth reagent, a fifth reagent and a sixth reagent, the second sub-sample is mixed with the third reagent and the fourth reagent to obtain a second sample to be tested, and the third sub-sample is mixed with the fifth reagent and the sixth reagent to obtain a third sample to be tested; the third reagent includes a first fluorescent dye, the fourth reagent includes a second hemolytic agent, the fifth reagent includes a second fluorescent dye, the sixth reagent includes a third hemolytic agent, the second hemolytic agent is the same as or different from the first hemolytic agent, the third hemolytic agent is different from either of the first and second hemolytic agents, and the second fluorescent dye is different from the first fluorescent dye; testing the sample to be tested further includes respectively passing particles in the second and third samples to be tested through the detection region of the optical detection device one by one, and respectively irradiating the particles in the second and third samples to be tested using the light source of the optical detection device to obtain respective scatter signal and respective fluorescence signal of the second and third samples to be tested, wherein the respective scatter signal includes a second side scatter intensity signal from the second sample to be tested, and a third side scatter intensity signal from the third sample to be tested, and the respective fluorescence signal includes a second fluorescence intensity signal from the first fluorescent dye of the second sample to be tested and a third fluorescence intensity signal from the second fluorescent dye of the third sample to be tested; obtaining particle information further includes obtaining particle information of the second sub-sample based on the second side scatter intensity signal and the second fluorescence intensity signal of the second sample to be tested, and obtaining particle information of the third sub-sample based on the third side scatter intensity signal and the third fluorescence intensity signal of the third sample to be tested, in which the particle information of the second sub-sample includes neutrophil information, monocyte information, lymphocyte information, and eosinophil information, and the particle information of the third sub-sample includes lymphocyte information, basophil information, and nucleated erythrocyte information; and the blast testing further includes:
when the blast information indicates that the sample contains no blasts, obtaining respective count of neutrophils, eosinophils, monocytes, and lymphocytes, and optionally obtaining immature granulocyte information and atypical lymphocyte information, based on the particle information of the second sub-sample; alternatively, when the blast information indicates that the sample contains blasts, eliminating an effect of the blast information on the particle information of the second sub-sample by combining the blast information with lymphocyte information from the particle information of the third sub-sample so as to obtain respective count of neutrophils, eosinophils, monocytes, and lymphocytes, and optionally obtain immature granulocyte information and atypical lymphocyte information, based on the particle information of the second sub-sample.

According to some other embodiments, the method further includes performing a routine testing on the sample.

According to an embodiment, the routine testing includes operations of: aspirating at least part of the sample as a first initial sub-sample; processing the first initial sub-sample, including mixing the first initial sub-sample with a third reagent and a fourth reagent to obtain a first initial sample to be tested, wherein the third reagent includes a first fluorescent dye, the fourth reagent includes a second hemolytic agent, and the second hemolytic agent is the same as or different from the first hemolytic agent; passing particles in the first initial sample to be tested through the detection region of the optical detection device one by one, and irradiating the particles in the first initial sample to be tested using the light source of the optical detection device to obtain scatter signals and fluorescence signals of the particles in the first initial sample to be tested, the scatter signals including a first initial side scatter intensity signal from the first initial sample to be tested, and the fluorescence signals including a first initial fluorescence signal from the first fluorescent dye in the first initial sample to be tested; obtaining particle information of the first initial sample to be tested based on the first initial side scatter intensity signal and the first initial fluorescence intensity signal, the particle information including at least leukocyte information; and when the leukocyte information is abnormal, issuing a blast alarm and optionally issuing the operation instruction.

According to yet another embodiment, the routine testing includes operations of: aspirating at least part of the sample as a first initial sub-sample and a second initial sub-sample, respectively; processing the first and second initial sub-samples respectively, including mixing the first initial sub-sample with a third reagent and a fourth reagent to obtain a first initial sample to be tested, and mixing the second initial sub-sample with a fifth reagent and a sixth reagent to obtain a second initial sample to be tested, the third reagent including a first fluorescent dye, the fourth reagent including a second hemolytic agent, the fifth reagent including a second fluorescent dye, the sixth reagent including a third hemolytic agent, and the second hemolytic agent being the same as or different from the first hemolytic agent, the third hemolytic agent being different from either of the first and second hemolytic agents, and the second fluorescent dye being different from the first fluorescent dye; respectively passing particles in the first and second initial samples to be tested through the detection region of the optical detection device one by one, and respectively irradiating the particles in the first and second initial samples to be tested using the light source of the optical detection device, to obtain respective scatter signals and respective fluorescence signal of the particles in the first and second initial samples to be tested, the respective scatter signal includes a first initial side scatter intensity signal from the first initial sample to be tested and a second initial side scatter intensity signal from the second initial sample to be tested, and the respective fluorescence signals includes a first initial fluorescence signal from the first fluorescent dye in the first initial sample to be tested and a second initial fluorescence signal from the second fluorescent dye in the second initial sample to be tested; obtaining particle information of the first initial sample to be tested based on the first initial side scatter intensity signal and the first initial fluorescence intensity signal, the particle information includes at least initial leukocyte information, and obtaining particle information of the second initial sample to be tested based on the second initial side scatter intensity signal and the second initial fluorescence intensity signal, the particle information includes at least initial lymph information; and when the initial leukocyte information is abnormal, issuing a blast alarm and optionally issuing the operation instruction.

According to this embodiment, the blast testing further includes: eliminating an effect of the blasts on the initial leukocyte information by combining the blast information with the initial lymphocyte information so as to obtain respective count of neutrophils, eosinophils, monocytes, and lymphocytes, and optionally obtain immature granulocyte information and/or atypical lymphocyte information.

According to some embodiments, the routine testing is carried out before the blast testing, and issuing of the operation instruction is enabled based on results of the routine testing.

The operation instruction includes a user-entered instruction or an instruction automatically triggered when a blast alarm is issued.

According to some embodiments, the method further includes: counting the blasts.

According to some embodiments, the method further includes: when the blast information indicates that the sample contains blasts, alarming the presence of blasts in the sample, or alarming the presence of blasts in the sample and outputting a count of blasts.

According to a preferred embodiment, the scatter signals further include a first forward scatter signal from the first sample to be tested, and the method further includes: determining that the blasts are lymph blasts and/or myeloid blasts based on the first forward scatter intensity signal and the antibody fluorescence intensity signal.

According to another preferred embodiment, the scatter signals further include a first forward scatter signal from the first sample to be tested, and the method further includes: alarming the presence of lymph blasts and/or myeloid blasts in the sample based on the first forward scatter intensity signal and the antibody fluorescence intensity signal.

According to some other embodiments, the method further includes: obtaining leukocyte information of the sample based on the first side scatter intensity signal and the antibody fluorescence intensity signal, the leukocyte information including information of lymphocytes, monocytes, neutrophils and eosinophils.

Preferably, in the disclosure, a reaction time of the first hemolytic agent and the sample is 30 to 80 seconds, preferably 50 to 60 seconds.

In the disclosure, the first hemolytic agent is capable of fragmenting erythrocytes while maintaining leukocytes intact in terms of cellular morphology.

In the disclosure, preferably, the first hemolytic agent is at least one selected from a quaternary ammonium-based cationic surfactant, a polyoxyethylene alkyl ether-based non-ionic surfactants, a fatty alcohol polyoxyethylene ether-based surfactant, an alkyl glycoside, a triterpenoid saponin, a steroidal saponin and diethylene glycol. Preferably, the first hemolytic agent includes diethylene glycol and formaldehyde dissolved in a buffer.

In the disclosure, preferably, the antibody is CD45.

In the disclosure, with a leukocyte four-part differential testing channel (i.e., a DIFF channel) of a blood analyzer, and by adding a fluorescently labeled antibody reagent, blasts are accurately differentiated from leukocytes and are accurately counted, thereby providing a simple and low-cost method capable of testing blasts using a conventional blood analyzer, and a blood analyzer.

A second object of the disclosure is to provide a sample analyzer. A sample dispensing device aspirates a sample from a sample container and dispenses at least part of the aspirated sample to a first reaction device and/or a second reaction device. By means of the first reaction device, the sample reacts with an antibody reagent and a first hemolytic reagent to prepare a first sample to be tested. By means of the second reaction device, the sample reacts with a first type of reagents to prepare a second sample to be tested. A first sample transfer assembly transfers the first sample to be tested from the first reaction device to an optical detection assembly to perform a blast testing, and the first sample transfer assembly transfers the second sample to be tested from the second reaction device to the optical detection assembly to perform a leukocyte categorizing and counting detection, so that one sample analyzer may be used for both the blast testing and the routing blood testing.

To this end, a third aspect of the disclosure provides a sample analyzer, including a sample dispensing device, an optical detection device, a first reaction device, a second reaction device, a first sample transfer assembly and a controller.

The sample dispensing device is configured to aspirate a sample from a sample container and dispense at least part of the aspirated sample to the first reaction device and/or the second reaction device.

The first reaction device is configured to at least provide a reaction site for the sample with an antibody reagent and a first hemolytic reagent to prepare a first sample to be tested, wherein an antibody in the antibody reagent is capable of binding to an antigen of a surface of a blast in the sample.

The second reaction device is configured to provide at least a reaction site for the sample with a first type of reagents to prepare a second sample to be tested.

The first sample transfer assembly is configured to transfer the first sample to be tested from the first reaction device to the optical detection assembly and transfer the second sample to be tested from the second reaction device to the optical detection assembly.

The optical detection assembly includes a flow cell, a light emitting component and a light receiving component, wherein the flow cell is configured to pass the first sample to be tested or the second sample to be tested through under thronging of a sheath liquid, the light emitting component is configured to emit light towards the first sample to be tested or the second sample to be tested in the flow cell, and the light receiving component is configured to receive a first optical signal generated when light emitted by the light emitting component passes through the first sample to be tested and receive a second optical signal generated when the light emitted by the light emitting component passes through the second sample to be tested.

The controller is configured to: obtain first particle information of the first sample to be tested through parsing the first optical signal fed back from the light receiving component, the first particle information including blast information; and obtain second particle information of the second sample to be tested through parsing the second optical signal fed back from the light receiving component, the second particle information including neutrophil information, eosinophil information, monocyte information and lymphocyte information.

According to an embodiment, the sample analyzer further includes a housing, the optical detection device, the first reaction device and the second reaction device all being located within the housing.

According to an embodiment, the controller is further configured to: control an amount of sample dispensed to the first reaction device by the sample dispensing device to be less than or equal to 60 µL during a sample dispensing process of a single blast testing item; and/or the controller is further configured to: control an amount of sample dispensed to the first reaction device by the sample dispensing device to be 50 µL ± 10 µL during a sample dispensing process of a single blast testing item.

According to an embodiment, the controller is further configured to: control the reaction time of the sample and the antibody reagent in the first reaction device to be less than or equal to 90s, preferably less than or equal to 60s, during a detection process of a single blast testing item.

According to a specific embodiment, the antibody reagent is a CD45 reagent.

According to an embodiment, the sample dispensing device is further configured to aspirate the antibody reagent from a first reagent container and dispense the aspirated antibody reagent to the first reaction device; alternatively, the sample analyzer further includes a first reagent dispensing device, the first reagent dispensing device being is configured to aspirate the antibody reagent from a first reagent container and dispense the aspirated antibody reagent to the first reaction device.

According to an embodiment, the antibody reagent includes an antibody that is fluorescently labeled and capable of binding to an antigen of a surface of a blast, the first optical signal includes a first side scatter signal generated when light emitted by the light emitting component irradiates the first sample to be tested and a first fluorescence signal generated by means of fluorescence labeling when the light emitted by the light emitting component irradiates the first sample to be tested; alternatively, the antibody reagent includes an antibody that is not fluorescently labeled but capable of binding to an antigen of a surface of a blast, the second reaction cell is configured to provide a reaction site for the sample, the antibody reagent and a first fluorescent reagent to prepare the first reaction solution, and the first optical signal includes a first side scatter signal generated when light emitted by the light emitting component irradiates the first sample to be tested and a first fluorescence signal generated by the first fluorescent reagent when the light emitted by the light emitting component irradiates the first sample to be tested.

According to an embodiment, the first reaction device is configured to provide a reaction site for the first reaction solution, the first hemolytic reagent and the second fluorescent reagent to prepare the first sample to be tested; the first optical signal further includes a second fluorescence signal generated by the second fluorescent reagent when the light emitted by the light emitting component irradiates the first sample to be tested; the controller obtains first particle information of the first sample to be tested through parsing the first optical signal fed back from the light receiving component: first blast information and first ghost region information through parsing the first side scatter signal and the first fluorescence signal, and second ghost region information through parsing the second fluorescence signal; and the second ghost region information is deducted from the first blast information and the first ghost region information so as to obtain blast information of the first sample to be tested.

According to an embodiment, the second reaction device includes a third reaction cell, and includes at least one of a fourth reaction cell and a fifth reaction cell, the third reaction cell is configured to provide a reaction site for the sample and the first type of reagents to prepare the second sample to be tested, the fourth reaction cell is configured to provide a reaction site for the sample and a second type of reagents to prepare a third sample to be tested, and the fifth reaction cell is configured to provide a reaction site for the sample with a third type of reagents to prepare a fourth sample to be tested; the first sample transfer assembly is further configured to transfer the third sample to be tested or the fourth sample to be tested from the second reaction device to the flow cell; the flow cell is further configured to pass f the third sample to be tested or the fourth sample to be tested through under thronging of a sheath liquid, the light emitting component is further configured to emit light towards the third sample to be tested or the fourth sample to be tested in the flow cell, and the light receiving component is further configured to receive a third optical signal generated when light emitted by the light emitting component passes through the third sample to be tested, or a fourth optical signal generated when the light passes through the fourth sample to be tested; and the controller is further configured to perform at least one parsing action based on the information fed back from the light receiving component as follows: obtaining third particle information of the third sample to be tested through parsing the third optical signal fed back from the light receiving component, the third particle information including at least basophil information; and obtaining fourth particle information of the fourth sample to be tested through parsing the fourth optical signal fed back from the light receiving component, the fourth particle information including reticulocyte information.

According to an embodiment, when sample testing items include a blast testing item and a routine blood testing item, the controller is configured to control the sample dispensing device to perform the following actions in sequence: aspirating the sample from the sample container, aspirating the antibody reagent from a first reagent container, dispensing the aspirated antibody reagent and part of the sample to the first reaction device, and dispensing part of the aspirated sample to the second reaction device, wherein an amount of the sample aspirated at one time by the sample dispensing device from the sample container is greater than or equal to a sum of an amount of the sample dispensed to the first reaction device and an amount of the sample dispensed to the second reaction device; or when sample testing items comprise a blast testing item and a routine blood testing item, the controller is configured to control the sample dispensing device to perform the following actions in sequence: aspirating the sample from the sample container, dispensing part of the aspirated sample to the second reaction device, aspirating the antibody reagent from a first reagent container, and dispensing the aspirated antibody reagent and part of the sample to the first reaction device, wherein an amount of the sample aspirated at one time by the sample dispensing device from the sample container is greater than or equal to a sum of an amount of the sample dispensed to the first reaction device and an amount of the sample dispensed to the second reaction device; or when sample testing items include a blast testing item and a routine blood testing item, the controller is configured to control the sample dispensing device to perform the following actions in sequence: aspirating a first sample from the sample container, aspirating the antibody reagent from a first reagent container, dispensing the aspirated antibody reagent and at least part of the first sample to the first reaction device, aspirating a second sample from the sample container, and dispensing at least part of the aspirated second sample to the second reaction device; or when sample testing items include a blast testing item and a routine blood testing item, the controller is configured to control the sample dispensing device to perform the following actions in sequence: aspirating a first sample from the sample container, dispensing at least part of the aspirated first sample to the second reaction device, aspirating a second sample from the sample container, aspirating the antibody reagent from a first reagent container, and dispensing the aspirated antibody reagent and at least part of the second sample to the first reaction device.

According to an embodiment, when the sample aspirated at one time by the sample dispensing device from the sample container is respectively dispensed at least to each of the first reaction device and the second reaction device, the sample dispensing device aspirates the sample from the sample container at one time in an amount less than or equal to 200 µL.

According to an embodiment, the second reaction device includes at least a third reaction cell, and the controller is further configured to: deduct abnormal lymphocyte data in the second particle information from the blast information of the first particle information so as to obtain blast measurement data; and/or the second reaction device includes at least the fourth reaction cell, and the controller is further configured to: deduct basophil data in the third particle information from the blast information of the first particle information so as to obtain blast measurement data.

According to an embodiment, the controller is further configured to: control an amount of the antibody reagent dispensed to the first reaction device by the sample dispensing device to be less than 5 µL during a sample dispensing process of a single blast testing item; and/or the controller is further configured to: control an amount of the antibody reagent dispensed to the first reaction device to be 5 µL ± 2 µL during an antibody reagent dispensing process of a single blast testing item.

According to an embodiment, the sample analyzer further includes a hemoglobin detection device, the sample dispensing device is further configured to dispense at least part of the aspirated sample to the hemoglobin detection device, the hemoglobin detection device is configured to measure hemoglobin parameters of a fifth sample to be tested that is at least prepared from the sample and a fourth type of reagents, and the controller is further configured to: obtain hemoglobin information of the fifth sample to be tested through parsing the information fed back from the hemoglobin detection device; and/or the sample analyzer further comprises an impedance detection device which is configured to measure a sixth sample to be tested that is at least prepared from the sample and a fifth type of reagents, and the controller is further configured to: obtain platelet information and/or erythrocyte information of the sixth sample to be tested by parsing the information fed back from the impedance detection device.

According to an embodiment, measurement of a sample in a sample container by the sample analyzer outputs at least two types of testing results as follows: blast testing results and routine blood testing results; and/or measurement of a sample aspirated at one time by the sample dispensing device from a sample container by the sample analyzer outputs at least two types of testing results as follows: blast testing results and routine blood testing results.

According to an embodiment, the sample analyzer further includes a recognition device which is configured to recognize the sample container, and the controller is further configured to: obtain at least information of testing items to be tested for the sample in the sample container based on the information fed back from the recognition device, and control the sample analyzer to perform a blast testing and/or a routine blood testing on the sample in the sample container based on the information of the testing items to be tested; and/or the sample analyzer further includes a human-computer interaction device which comprises a blast testing mode and a routine blood testing mode, and the controller is further configured to: control the sample analyzer to perform a blast testing and/or a routine blood testing on the sample in the sample container based on the testing mode selected by an operator at the human-computer interaction device.

### BRIEF DESCRIPTION OF THE DRAWINGS

In the drawings, the same reference signs represent the same components.
FIG. 1 is a schematic diagram showing a principle of leukocyte analysis by nucleic acid fluorescence staining in a blood analyzer using flow cytometry.
FIG. 2 is a two-dimensional scatter diagram of side scatter intensity vs. nucleic acid fluorescence intensity obtained by testing blood samples using the DIFF channel of a conventional blood analyzer, wherein picture A is a two-dimensional scatter diagram of a normal (healthy) blood sample, and picture B is a two-dimensional scatter diagram of a blood sample containing blasts.

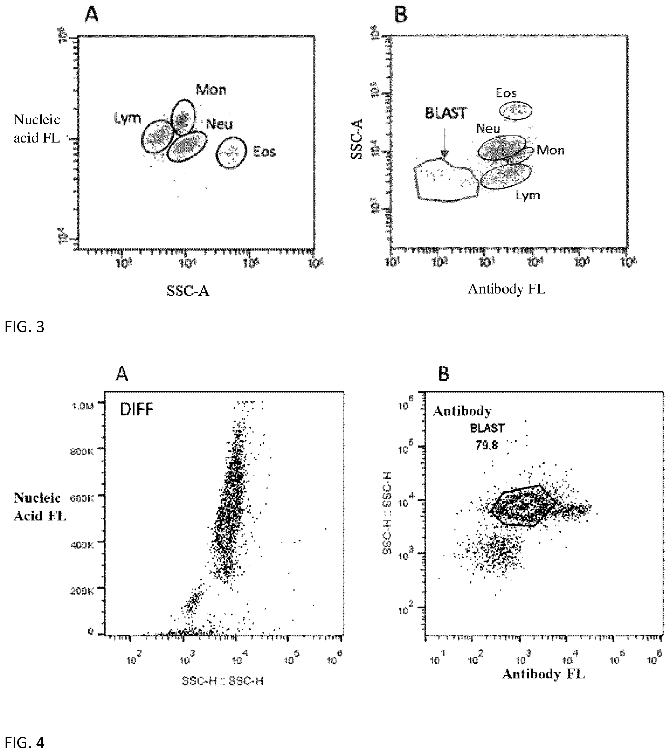

FIG. 3 is a two-dimensional scatter diagram of side scatter intensity and fluorescence intensity obtained by testing blood samples using a blood analyzer, wherein picture A is a two-dimensional scatter diagram of side scatter intensity vs. nucleic acid fluorescence intensity (SSC/nucleic acid FL) obtained by performing a routine leukocyte testing on a normal blood sample, and picture B is a two-dimensional scatter diagram of side scatter intensity vs. antibody fluorescence intensity (SSC/antibody FL) obtained by testing a blood sample containing blasts using a fluorescently labeled antibody according to the method of the disclosure, wherein in which the framed area is an area where the blasts appear.
FIG. 4 is a comparison of a two-dimensional scatter diagram of side scatter intensity vs. nucleic acid fluorescence intensity and a two-dimensional scatter diagram of side scatter intensity vs. antibody fluorescence intensity obtained by testing blood samples using the DIFF channel of the blood analyzer of the disclosure, picture A shows the area where monocytes and lymphocytes should usually appear in a two-dimensional scatter diagram of side scatter intensity vs. nucleic acid fluorescence intensity of a sample containing blasts processed with a nucleic acid fluorescent dye-containing reagent under a hemolytic condition, and picture B shows a two-dimensional scatter diagram of antibody fluorescence intensity vs. side scatter intensity of the same sample processed with a reagent containing fluorescently labeled CD45 under a hemolytic condition, in which the framed area is an area where the blasts appear.
FIG. 5 is a schematic flowchart of a method for testing blasts according to an embodiment of the disclosure.
FIG. 6 is a schematic flowchart of a method for testing blasts according to another embodiment of the disclosure.
FIG. 7 is a schematic flowchart of a method for testing blasts according to still another embodiment of the disclosure.
FIG. 8 is a schematic diagram showing the distribution of each particle swarm in a two-dimensional scatter diagram of a third fluorescence intensity vs. side scatter intensity (FL/SSC) obtained by a WNB channel detection.
FIG. 9 shows respective corresponding positions of blast particle swarms from myeloid (picture A) and lymphoid (picture B) samples in two-dimensional scatter diagrams of antibody fluorescence intensity vs. side scatter intensity (antibody/SSC)in a two-dimensional scatter diagram of antibody fluorescence intensity-forward scatter intensity (antibody/FSC) (panel C).
FIG. 10 is a schematic diagram showing a liquid circuit system of a blood analyzer according to an embodiment of the disclosure.
FIG. 11 is a schematic diagram showing a liquid circuit connection between an optical channel reaction cell, a sampling component, an optical detection unit, a diluent supply device and a fluid power device according to the embodiment of the disclosure.
FIG. 12 is a schematic diagram showing a liquid circuit connection between an impedance counting detection unit, a hemoglobin detection unit, a diluent supply device and a fluid power device according to the embodiment of the disclosure.
FIG. 13 is an FL/SSC scatter diagram of a sample containing a high content of immature granulocytes (IG) but no blast obtained by the test according to example 1.
FIG. 14 is an FL/SSC scatter diagram of a sample containing blasts obtained by the test according to example 2.
FIG. 15 is a WNB channel FL/SSC scatter diagram (A) and a DIFF channel FL/SSC scatter diagram (B) of a sample containing blasts obtained by the test according to example 2.
FIG. 16 is a CD45FL/SSC scatter diagram of a sample containing blasts obtained by the test according to example 4.
FIG. 17 is a schematic diagram showing the structure of a sample analyzer according to another embodiment of the disclosure.
FIG. 18 is a schematic diagram showing a working process of a sample needle according to the embodiment of the disclosure.

### DESCRIPTION OF THE PREFERRED EMBODIMENTS

The technical solutions of the disclosure will be clearly and completely described below in conjunction with specific embodiments, examples and drawings. Obviously, the embodiments described are merely some of the embodiments of the disclosure rather than all the embodiments. Based on the embodiments in the disclosure, all the other embodiments that would have been obtained by those of ordinary skill in the art without any inventive effort shall fall within the scope of protection of the disclosure.

Throughout the specification, unless otherwise specified, the terms used herein should be understood as the meanings commonly used in the art. Therefore, unless otherwise defined, all the technical and scientific terms used herein have the same meaning as commonly understood by those of skill in the art to which the disclosure belongs. In the event of a conflict, this specification takes precedence.

All directional indications (such as up, down, left, right, front and back) in the disclosure are only used to explain the relative position relationship, motion, etc. between components in a specific view position, and if the specific view position changes, the directional indication will change accordingly.

The terms such as "first" and "second" are used herein for descriptive purposes only, and cannot be construed as indicating or implying relative importance or implicitly indicating the number of technical features indicated. Thus, the features defined with "first" and "second" may explicitly or implicitly include at least one of the features. In addition, the technical solutions among various embodiments can be combined with each other, which, however, must be based on that it can be realized by those of ordinary skill in the art. When a combination of the technical solutions is contradictory or cannot be realized, it should be considered that the combination of the technical solutions does not exist, nor is it within the scope of protection required by the disclosure.

The term "sample" mentioned herein, unless otherwise specified, refers to a blood sample, a bone marrow sample or a body fluid sample. The blood sample can be peripheral blood or venous blood. The body fluid sample is, for example, a cerebrospinal fluid, a pleural effusion, an ascites fluid, a myocardial fluid, a synovial fluid, a peritoneal dialysis fluid, or a fluid obtained by intraperitoneal cleaning.

The term "blast" or shown as "BLAST" herein can be used interchangeably and both refer to a cell at a beginning stage of development into various blood cells. Blasts do not appear in the blood of healthy people, but they are found in the blood of people with some diseases, especially blood diseases.

The term "hemolytic agent" mentioned herein, unless otherwise specified, refers to an agent that can lyse erythrocytes while allowing leukocytes to maintain their basic cell morphology and have their cell membranes damaged to a certain extent. For example, the hemolytic agent that can be used in the disclosure may be selected from a surfactant, an alkyl glycoside, a triterpenoid saponin, a steroidal saponin, etc.

The term "antibody" mentioned herein, unless otherwise specified, refers to an antibody that is able to bind to a cell membrane surface antigen of a blast, particularly a monoclonal antibody. The antibody may non-specifically bind to the cell membrane surface antigens of blasts, that is, the antibody may also bind to the cell membrane surface antigen of other cells in the blood, such as leukocytes. However, the antibody differentially binds to surface antigens of different blood cells (e.g., in terms of firmness, quantity, site, etc.), and thus different signals can be obtained.

The term "fluorescently labeled antibody" mentioned herein refers to the above mentioned antibody to which a fluorescent marker that can be used for detection is bound. The fluorescent marker can be a fluorescent substance with an appropriate excitation wavelength that can be selected according to different test platforms.

The term "fluorescent dye" mentioned herein, unless otherwise specified, refers to a dye that can specifically bind to intracellular substances (such as DNA, RNA or protein) and emit fluorescence with a specific wavelength under the excitation of excitation light.

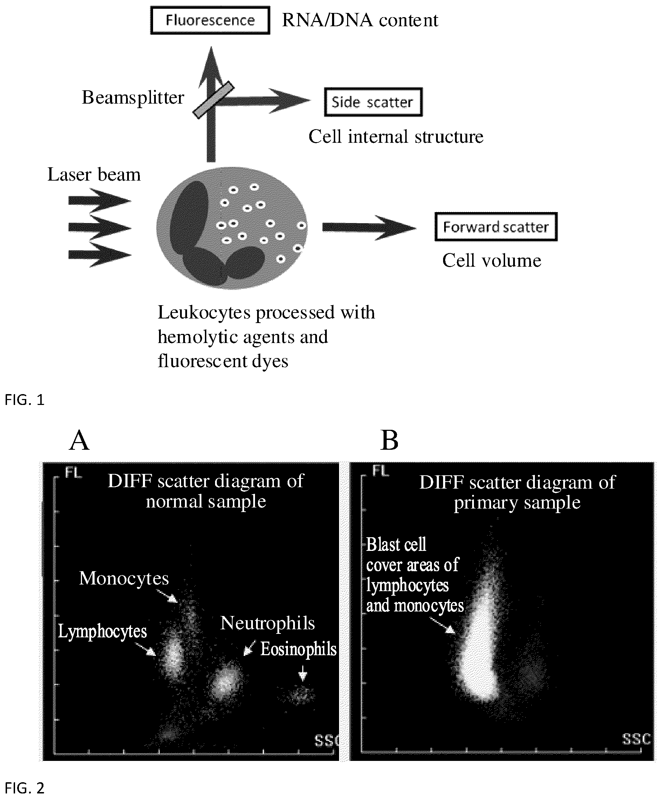

Typically, the testing of leukocytes in the blood can be performed using a fully automated blood analyzer. Specifically, leukocytes in a sample can be categorized and counted by a sheath flow impedance method, a laser scattering method, a flow cytometry technique combined with nucleic acid fluorescence staining, etc. The detection using a flow cytometry technique combined with nucleic acid fluorescence staining (DIFF channel) involves using nucleic acid fluorescence staining under a hemolytic condition and then performing analysis based on optical signals. The principle thereof is shown in FIG. 1. After aspiration of a blood sample by a blood analyzer, the sample is first treated with a hemolytic agent and a nucleic acid fluorescent dye. The erythrocytes are destroyed and lysed by the hemolytic agent, while the leukocytes still maintain their cell morphology. The nucleic acid fluorescent dye can enter the leukocytes and specifically bind to nucleic acids in the cells. Next, the flow cytometry technique is used to allow the cells in the sample to pass through a laser detection hole one by one. When a cell passing through the detection hole are irradiated by a laser beam emitted by a light source, scattered light at various angles is generated, and meanwhile, the fluorescent dye bound to a nucleic acid is excited by the laser and emits fluorescence with a specific wavelength. The different properties (such as volumes, degrees of staining, sizes and contents of cell contents, and densities of cell nucleus) of cells lead to the generation of different intensities of scattered light and fluorescence at various angles. Therefore, relevant information about structures and compositions of the cells can be obtained after the scatter signals and fluorescence signals are received by an optical detector. The intensity of forward scatter (FS) reflects the volume of a cell, the intensity of side scatter (SS) reflects the complexity of a cell internal structure, and the intensity of fluorescence (FL) reflects the content of nucleic acid substances (including DNA and RNA) in a cell. These parameters can be used to categorize and count the leukocytes in the sample. Typically, a two-dimensional scatter diagram is generated based on two-dimensional signal data of side scatter intensity and fluorescence intensity in a DIFF channel, and a four-part differential count of lymphocytes, monocytes, eosinophils and neutrophils can be obtained (see FIG. 2, picture A). When blasts are present in the peripheral blood of a patient, the blasts are also stained with fluorescent dyes, and the area reflect the particle information thereof often overlaps those of the lymphocyte and monocyte (called "blast sensitive areas", see FIG. 2, panel B) in an SS-FL two-dimensional scatter diagram, therefore it is impossible to distinguish lymphocytes, monocytes and blasts, and thus lymphocytes and monocytes cannot be accurately quantified. Moreover, currently commercially available blood analyzers can only provide blast alarm but cannot recognize and accurately count blasts. In addition, the sensitivity and specificity of the alarm are not good, and both false positives and false negatives may exist.

The inventors have found that, in contrast to the use of nucleic acid fluorescent dyes in the above routine leukocyte testing, the use of a monoclonal antibody that can bind to surface antigens of blasts can directly distinguish blasts from other leukocytes based on the differential binding degrees of the monoclonal antibody with different cell surface antigens and in combination with a side-scattered light that reflects a complexity of a cell internal structure. Reference can be made to FIG. 3, which shows a detection result of a normal blood sample treated with a hemolytic agent and a nucleic acid fluorescent dye (picture A) and a detection result of a blood sample containing blasts processed with a hemolytic agent and a fluorescently labeled antibody (picture B) using a blood analyzer, in which in the two-dimensional scatter diagram of side scatter intensity-antibody fluorescence intensity in picture B, the area framed by an irregular pattern is an area where the blasts (BLAST) appear, and it can be seen from picture B that the blasts can be completely distinguished from other leukocytes by the antibody fluorescence signal, thereby achieving accurate positioning of the blasts.

Reference can be further made to FIG. 4, which shows, when a sample contains blasts, a comparison of a two-dimensional scatter diagram obtained from leukocyte analysis using a conventional nucleic acid fluorescence method versus a two-dimensional scatter diagram obtained from analysis using the method of the disclosure. Picture B shows a two-dimensional scatter diagram of antibody fluorescence intensity vs. side scatter intensity of a sample containing blasts is treated with a reagent containing a fluorescently labeled antibody under a hemolytic condition, in which the framed area is an area where the blasts appear. Picture A shows that after treating the same sample with a nucleic acid fluorescent dye-containing reagent under a hemolytic condition, areas where monocytes and lymphocytes should normally be distinguished are completely indistinguishable from blasts, monocytes and lymphocytes.

Therefore, the inventors have proposed a blood analyzer and a method for testing blasts that can distinguish blasts from other leukocytes and accurately count blasts.

According to an embodiment of the disclosure, a sample analysis method is provided.

The method includes receiving an operation instruction and performing a blast testing on a sample. The operation instruction is an instruction selected by a user (for example, in case of a sample known to contain blasts, the user can directly select to perform a blast testing; or after a blast alarm is issued by an instrument, the user can also select to perform a blast testing or not), or is an instruction directly triggered by a blast alarm issued during detection by a blood analyzer.

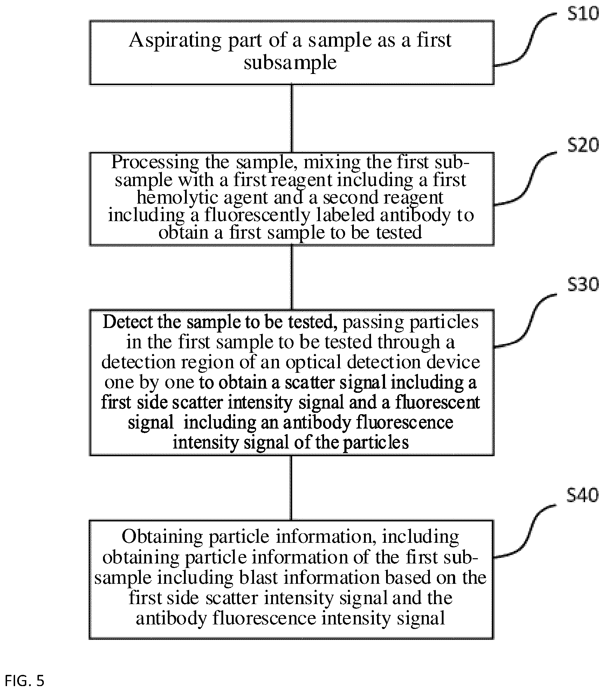

Performing a blast testing on a sample, as shown in FIG. 5, includes the following operations.

S10: aspiration of a sample includes aspirating at least part of the sample as a first sub-sample.

S20: processing the sample includes mixing the first sub-sample with a first type of reagents to obtain a first sample to be tested, in which the reagents include a first reagent and a second reagent, the first reagent includes a first hemolytic agent, which is mixed with the first sub-sample for no more than 2 minutes, and the second reagent includes a fluorescently labeled antibody, which can bind to an antigen of a surface of a blast.

S30: detecting the sample to be tested includes passing particles in the first sample to be tested through a detection region of an optical detection device one by one, and irradiating the particles in the first sample to be tested with a light source of the optical detection device to measure a scatter signal and a fluorescence signal of the first sample to be tested, in which the scatter signal includes a first side scatter intensity signal from the first sample to be tested, and the fluorescence signal includes an antibody fluorescence intensity signal from the fluorescently labeled antibody.

S40: obtaining particle information includes obtaining particle information in the first sub-sample according to the first side scatter intensity signal and the antibody fluorescence intensity signal, in which the particle information in the first sub-sample includes blast information. This method can be performed using a DIFF channel of a blood analyzer as described in detail below, or a new separate detection channel added therein.

In this embodiment, in S10, an operation of aspiration of a sample, a sample aspiration device can be used for quantitative aspiration of part of the sample as a first sub-sample for a subsequent blast testing. The operation of aspiration of a sample may further include aspirating part of the sample multiple times to obtain multiple sub-samples for different detections, such as leukocyte analysis, platelet analysis and hemoglobin analysis. This operation may further include dividing the sample from one aspiration into several sub-samples for different detections.

In S20, an operation of processing the sample, the first sub-sample is mixed with the first and second reagents and subjected to hemolysis and an antibody-antigen reaction to prepare a first sample to be tested. The first and second reagents may be mixed with the sample in any order, or may be mixed with the sample simultaneously. The mixed sample is incubated for a certain period of time to lyse erythrocytes and allow the fluorescently labeled antibody to bind to a surface antigen of a cell.

The first reagent containing the first hemolytic agent in this operation can achieve rapid hemolysis on erythrocytes, for example, the hemolysis can be completed within about 2 minutes, usually within 1 minute, more usually in 30 to 80 seconds, or even in 50 to 60 seconds. A reaction of binding the fluorescently labeled antibody in the second reagent to cell surface antigens usually needs to be carried out at a temperature of about 42°C to 45°C for about 45 to 60 seconds. The reaction time will vary depending on the selected antibody and the incubation temperature.

The first hemolytic agent in the first reagent may be the same as those used in a DIFF channel of a routine leukocyte testing or may be different from those used in the DIFF channel. The first hemolytic agent may be a single hemolytic agent or a combination of multiple hemolytic agents. According to an embodiment, the first hemolytic agent may include at least one selected from a quaternary ammonium salt-based cationic surfactant, a polyoxyethylene alkyl ether-based non-ionic surfactant, a fatty alcohol polyoxyethylene ether-based surfactant, an alkyl glycoside, a triterpenoid saponin, a steroidal saponin and diethylene glycol, and specifically a glycoside compound of a general formula I:

R-(CH₂)ₙ-CH₃ (I)

in which R is selected from the group consisting of a monosaccharide, a deoxymonosaccharide and a polysaccharide, and n is an integer of 5-17. The hemolytic agents disclosed in Chinese Patent Application CN 111602052 A can all be used as the first hemolytic agent of the disclosure. This patent document is incorporated herein by reference in its entirety. According to other embodiments, the first hemolytic agent may include diethylene glycol, and preferably further include formaldehyde for fixing cells.

According to other embodiments, the first hemolytic agent may include a cationic surfactant, a non-ionic surfactant, and an aromatic organic acid and/or a salt thereof. The aromatic organic acid may be one or more selected from the group consisting of terephthalic acid, phthalic acid, hydroxybenzoic acid, acetylsalicylic acid, p-aminobenzoic acid, benzenesulfonic acid, p-toluenesulfonic acid and hydroxybenzenesulfonic acid. The cationic surfactant is selected from at least one of a quaternary ammonium salt and a pyridinium salt. The non-ionic surfactant is selected from at least one of a polyoxyethylene-based surfactant, Span and Tween.

The first reagent may also contain components such as a buffer (e.g., phosphoric acid and a salt thereof, citric acid and a salt thereof, and acetic acid and a salt thereof), a preservative (e.g., sodium azide and ProClin series), a metal chelator (e.g., a sodium salt of EDTA), and an osmotic pressure regulator (e.g., sodium chloride).

The first reagent that can be used may be a commercially available hemolytic agent for a leukocyte detection, such as an M-68P LD hemolytic agent, or other hemolytic agents, such as diethylene glycol and formaldehyde dissolved in a buffered solution.

The fluorescently labeled antibody in the second reagent is an antibody that is capable of binding to an antigen on a surface of a blast and is linked to a suitable fluorescent marker, in particular a monoclonal antibody.

The disclosure has no particular limitation on antibodies. As long as an antibody has different binding forces with various types of cells and can distinguish blasts from other leukocytes by antibody fluorescence and side scatter intensity, the antibody can be used. For example, the antibody is one of or a combination of two or more of CD45, CD71 and CD34. Preferably only one antibody is used, and more preferably the antibody is CD45.

The disclosure also has no particular limitation on fluorescent markers, as long as a fluorescent marker, after binding to an antibody, neither affects the binding of the antibody to an antigen, nor affects the use of other reagents (such as a hemolytic agent). According to a wavelength of a laser light source used by a blood analyzer, a fluorescent substance that can be excited by the light source can be selected as a marker. These fluorescent markers are well known to those of skill in the art. Examples of fluorescent markers include, but are not limited to FITC (excitation by blue light) and APC (excitation by red light). Commercially available fluorescently labeled antibodies can be used, for example, CD45-FITC and CD45-APC.

The fluorescently labeled antibody in the second reagent has a concentration of 100-200 µg/mL, and a solvent is usually a phosphate buffer at pH 7.2. The second reagent also includes sodium azide and bovine serum albumin.

The first reagent can be mixed with a sample at a volume ratio used in a conventional hemolysis treatment, such as 50 : 1. For example, about 1 mL of the first reagent may be mixed with about 20 µL of the sample. The second reagent can be mixed with a sample at a volume ratio of 1 : 20.

In S30, an operation of detecting the sample to be tested, after completion of erythrocyte hemolysis and an antibody-antigen reaction, the first sample to be tested is delivered to an optical detection unit for an optical detection. In the optical detection unit, each particle passes through a detection region of a flow cell one by one, and scattered light in different directions are generated under the irradiation of a laser light source. At the same time, due to the antibodies binding to the cell surface, the fluorescent markers carried by the antibodies are excited and emit fluorescence. The scatter signal and fluorescence signal of each particle are collected by a signal collecting device arranged around the detection region and sent to a processor. In this embodiment, a scatter signal of the first sample to be tested at least includes a first side scatter intensity signal. In other embodiments, a first forward scatter intensity signal may be collected at the same time, and scatter intensity signals at other angles may be further collected as needed. In this embodiment, a fluorescence signal of the first sample to be tested is an antibody fluorescence intensity signal emitted by a fluorescent marker carried by an antibody.

According to some embodiments of the disclosure, a blast testing can be performed using a DIFF channel of a routine leukocyte testing, in which only a fluorescence staining reagent used for the leukocyte testing needs to be replaced with an antibody fluorescent reagent. According to other embodiments, a blast testing can be performed using a separate antibody channel, whereas a leukocyte testing is still performed using the DIFF channel.

In S40, an operation of obtaining particle information, an SSC-antibody FL two-dimensional scatter diagram is generated according to the received first side scatter intensity signal and fluorescence intensity signal, and particle information of the first sub-sample including blast information is obtained. Still with reference to FIG. 3 and FIG. 4B, it can be seen that in coordinates containing antibody fluorescence signals, population of blasts is significantly distinguished from those of other leukocytes, so that accurate blast information is obtained. For samples from healthy subjects, no particles may be detected in an area of blast particle population (i.e., the blast percentage is 0%), or there are very few particles. For a sample from a patient (as shown in FIG. 4B), accurate differentiation and counting of blasts is obtained.

According to the disclosure, the method can eliminate the effect of blasts on a leukocyte detection while obtaining count of blasts, thereby further obtaining accurate counts of leukocytes, which can be specifically achieved via a variety of embodiments.

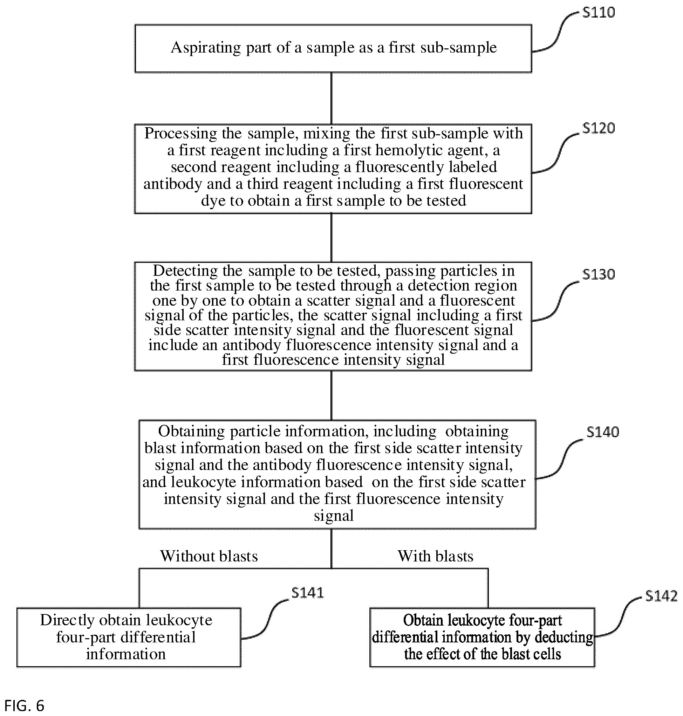

According to a first embodiment, by one sample preparation and one detection, a DIFF channel of a blood analyzer can be used to simultaneously obtain blast information and leukocyte information, in which an accurate blast count can be obtained, and a four-part differential count of leukocytes can be obtained without being affected by the blasts in the sample. This embodiment is particularly suitable for a blood analyzer equipped with dual fluorescence detectors. Those of skill in the art should understand that in this method, a fluorescence wavelength emitted by a fluorescent marker for labeling an antibody should be different from a fluorescence wavelength emitted by a fluorescent reagent used in leukocyte counting. Specifically, with reference to FIG. 6, the method for testing blasts may include the following operations.

S110: part of a sample is aspirated as a first sub-sample, which is the same as S10 in the above embodiments.

S120: processing the sample includes mixing the first sub-sample with a first reagent including a first hemolytic agent, a second reagent including a fluorescently labeled antibody, and a third reagent including a first fluorescent dye to obtain a first sample to be tested, which differs from S20 in the above embodiments in that the first sub-sample is further mixed with a third reagent including a first fluorescent dye, in which the first, second and third reagents are sequentially mixed with the first sub-sample in any order, or are mixed with the first sub-sample simultaneously.

The first and second reagents are as described above, and the method of mixing same with the sample is also as described above.

The third reagent is a nucleic acid fluorescent dye-containing reagent used for a routine leukocyte testing using a DIFF channel. There is no particular limitation on the first fluorescent dye in the third reagent. A fluorescent dye with a suitable excitation wavelength can be selected according to a light source of a blood analyzer used. The first fluorescent dye is a nucleic acid fluorescent dye. Commercially available nucleic acid fluorescent dyes and nucleic acid-specific fluorescent dyes disclosed in some patent applications can all be used in the method.

Examples of the commercially available nucleic acid fluorescent dyes include SYTO series nucleic acid dyes from Thermofisher. In addition, fluorescent dyes disclosed in Chinese Patent Application CN 201010022414.6, anthocyanin dyes disclosed in Chinese Patent Application CN 200910109215.6, fluorescent dyes disclosed in Chinese Patent Application CN 200810216864.1, etc. can all be used in the disclosure. The above patent documents are incorporated herein by reference in their entirety.

The first fluorescent dye can be dissolved in a suitable organic solvent (such as ethanol, methanol and ethylene glycol) to form the third reagent. The commercially available ones, such as an M-68P FD staining solution, can be used as the third reagent. The disclosure has no particular limitation on the third reagent.

The third reagent can be mixed with a sample at a volume ratio used in a routine leukocyte testing using a DIFF channel, such as 1 : 1.

In the first sub-sample obtained after the processing in S120, the erythrocytes have been lysed, and blood cells that still maintain the complete cell morphology, such as leukocytes and possibly existed blasts have their intracellular nucleic acid substances stained, and also have fluorescently labeled antibodies bound to their cell membranes.

S130: the sample to be tested is detected, which is the same as the above embodiments, in which particles in the first sample to be tested pass through a detection region of a flow cell one by one, and scattered light in different directions are generated under the irradiation of a laser light source; and moreover, due to antibodies binding to cell surfaces, fluorescent markers carried by the antibodies are excited and emit antibody fluorescence. The difference lies in that nucleic acids inside the cells bind to a first fluorescent dye, which has the characteristic of significant increase in a fluorescence quantum yield after binding to nucleic acids and therefore is also excited and emits fluorescence. In this embodiment, a scatter signal of the first sample to be tested at least includes a first side scatter intensity signal. In other embodiments, a first forward scatter intensity signal may be collected at the same time, and scatter intensity signals at other angles may be further collected as needed. In this embodiment, a fluorescence signal of the first sample to be tested is an antibody fluorescence intensity signal emitted by fluorescent markers carried by antibodies, and a first fluorescence intensity signal emitted by a first fluorescent dye bound to nucleic acids.

S140: obtaining particle information includes obtaining blast information according to the first side scatter intensity signal and the antibody fluorescence intensity signal, and obtaining leukocyte information according to the first side scatter intensity signal and the first fluorescence intensity signal.

In this embodiment, since the cells are simultaneously bound to the fluorescently labeled antibody and the first fluorescent dye, each particle can be detected as a signal of at least four dimensions, and more information about the particles can be obtained using signals of different dimensions. As mentioned above, accurate differentiation and counting of blasts can be directly obtained using the first side scatter intensity signal and the antibody fluorescence intensity signal. However, the leukocyte information obtained using the first side scatter intensity signal and the first fluorescence intensity signal may be affected by the blasts that may be contained in the sample, making it difficult to distinguish between lymphocytes, monocytes and blasts (see FIG. 4A).

In order to obtain accurate four-part differential information of leukocytes, blast information needs to be used in this operation. When the proportion of blasts is measured to be 0%, that is, the sample does not contain blasts, categorizations and counts of neutrophils, eosinophils, monocytes and lymphocytes are directly obtained according to the first side scatter intensity signal and the first fluorescence intensity signal (S141). When the proportion of blasts is measured to be greater than 0%, that is, the sample contains blasts, categorizations and counts of neutrophils, eosinophils, monocytes and lymphocytes are obtained after deducting the effect of blasts from particle information of the first sub-sample (that is, after blast particle information is recognized based on the first side scatter intensity signal and the antibody fluorescence intensity signal, the blast information is deducted from a scatter diagram of the first side scatter intensity signal and the first fluorescence intensity signal) (S142).

In addition, in S141 and S142, immature granulocyte information and/or atypical lymphocyte information may be further obtained if the sample contains these cells.

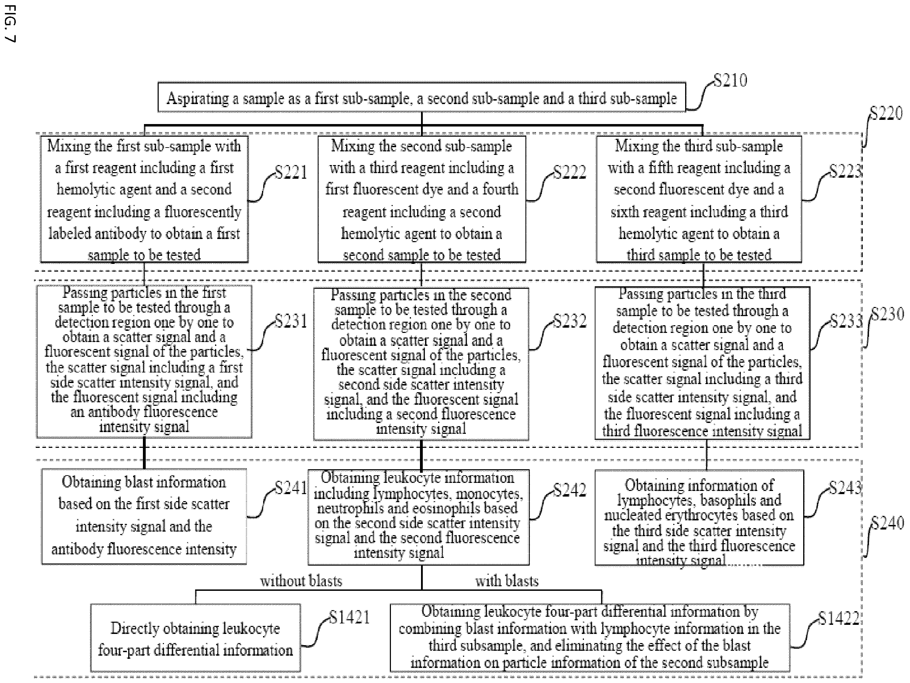

According to a second embodiment, three samples to be tested are prepared separately, one for blast detection, one for a four-part differential leukocyte detection using a DIFF channel, and one for nucleated erythrocyte, basophil and lymphocyte detection using a WNB channel. This embodiment is particularly suitable for a blood analyzer equipped with only one fluorescence detector. Specifically, with reference to FIG. 7, the method for detection of blasts may include the following operations.

S210: a sample is aspirated as a first sub-sample, a second sub-sample and a third sub-sample, in which the sample can be aspirated once and then divided into three blood sections for separate detection, or the sample can be aspirated for sever times.

S220: each sub-sample is processed. In this operation, the three sub-samples are processed separately.

S221: the first sub-sample is mixed with the first reagent and the second reagent to obtain a first sample to be tested. This operation is the same as S20 in the above embodiment.

S222: the second sub-sample is mixed with the third reagent and the fourth reagent to obtain a second sample to be tested. This operation is the same as a sample processing operation in a routine leukocyte testing using a DIFF channel.

S223: the third sub-sample is mixed with the fifth reagent and the sixth reagent to obtain a third sample to be tested. This operation is the same as a sample processing operation in routine detection of nucleated erythrocyte, basophil and lymphocyte using a WNB channel.

The fourth reagent includes the second hemolytic agent, the fifth reagent includes the second fluorescent dye, and the sixth reagent includes the third hemolytic agent. As mentioned above, the second hemolytic agent may be the same as or different from the first hemolytic agent, and the third hemolytic agent is different from both the first and second hemolytic agents. The second fluorescent dye is different from the first fluorescent dye. The fifth reagent and the sixth reagent are respectively a fluorescent reagent and a hemolytic agent that are used for a conventional WNB channel detection.

The fourth reagent includes a second hemolytic agent. The second hemolytic agent is one of those used in a DIFF channel of a routine leukocyte testing. For example, the first hemolytic agent may be a single hemolytic agent or a combination of multiple hemolytic agents. According to one embodiment, the first hemolytic agent is a surfactant, such as a cationic surfactant (e.g., a quaternary ammonium salt-based cationic surfactant) or a non-ionic surfactant (e.g., an alkyl alcohol polyoxyethylene ether-based surfactant). In other embodiments, the first hemolytic agent can be an alkyl glycoside, a triterpenoid saponin, a steroidal saponin, etc., and specifically a glycoside compound of a general formula I:

R-(CH₂)ₙ-CH₃ (I)

in which R is selected from the group consisting of a monosaccharide, a deoxymonosaccharide and a polysaccharide, and n is an integer of 5 to 17. The hemolytic agents disclosed in Chinese Patent Application CN 111602052 A can all be used as the first hemolytic agent of the disclosure. This patent document is incorporated herein by reference in its entirety.

Similar to the foregoing first reagent, the fourth reagent may also contain components such as a buffer, a preservative, a metal chelator, and an osmotic pressure regulator.

The first reagent that can be used may be a commercially available hemolytic agent for a leukocyte testing, such as an M-68P LD hemolytic agent,

The fourth reagent is mixed with a sample at a volume ratio used in a conventional DIFF channel detection, such as 50 : 1.

The fifth reagent includes a second fluorescent dye. The second fluorescent dye is a dye that is able to bind to proteins. An example of the second fluorescent dye is a compound having the following structure: 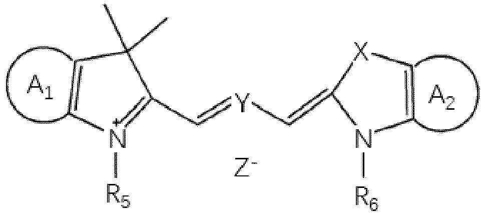 in which 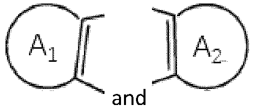 are independently 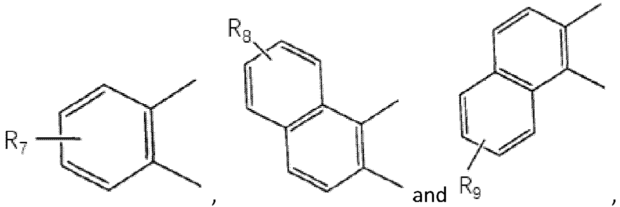
R₇, R₈ and R₉ can be selected from H, halogen, cyano, hydroxyl, C₁₋₁₈ alkyl, C₁₋₁₈ alkyl sulfonic acid group, sulfonic acid group and C₁₋₁₅ alkyl-COOR₁₀, where R₁₀ is H or C₁₋₆ alkyl;
R₅ and R₆ are each independently selected from C₁₋₁₈alkyl-COOR₁₁, C₁₋₁₈alkyl-OR₁₁ and benzyl, in which the benzyl may be substituted with a group selected from halogen, hydroxyl, mercapto, cyano, nitro, alkyl, aryl, alkoxy, heterocyclyl, haloalkyl, amino, alkylamino, amido and carboxyl, and R₅ and R₆ are not benzyl at the same time;
R₁₁, at each occurrence, is independently H, C₁₋₁₈ alkyl or phenyl, in which the phenyl may be substituted with a group selected from halogen, hydroxyl, mercapto, cyano, nitro, alkyl, aryl, alkoxy, heterocyclyl, haloalkyl, amino, alkylamino, amido and carboxyl;
X is -CH₂-, -C(CH₃)₂-, -O-, -S- or -Se-;
Y is -CH₂-CH=CH- and one of the following: 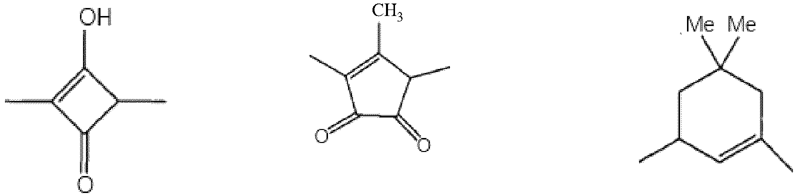
in which Z⁻ is an anion.

The second fluorescent dye is dissolved at a concentration of, for example, 50 µg/mL in a suitable solvent (such as methanol, ethanol and ethylene glycol) as a fifth reagent. The commercially available ones, such as an M-68P FN staining solution, can be used as the second fluorescent dye.

The sixth reagent includes a third hemolytic agent. The third hemolytic agent is different from the first or second hemolytic agents. The third hemolytic agent may include a surfactant selected from at least one of a cationic surfactant and a non-ionic surfactant.

The cationic surfactant may be selected from a quaternary ammonium salt-based cationic surfactant having a structure as shown in formula I, and a specific example of the structural formula is: 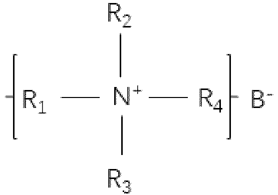
in which R₁ is C₆₋₁₄ alkyl or alkenyl;
R₂ and R₃ are C₁₋₄ alkyl or alkenyl;
R₄ is C₁₋₄ alkyl, alkenyl or benzyl;
B is a halogen atom.

The cationic surfactant is preferably dodecyltrimethylammonium chloride, hexadecyltrimethyl quaternary ammonium bromide, or octadecyldimethylbenzyl quaternary ammonium chloride.

The non-ionic surfactant may be selected from octylphenyl polyoxyethylene ether and polyoxyethylene cetyl ether.

The third hemolytic agent may also include an aromatic organic acid or a salt thereof, such as salicylic acid and a salt thereof, and benzoic acid and a salt thereof.

The third hemolytic agent as the sixth reagent may be a commercially available hemolytic agent for a leukocyte testing, such as an M-68P LN hemolytic agent. The third hemolytic agent may be an acidic hemolytic agent (pH 3.0), different from the first or second hemolytic agent. The sixth reagent is similar to the first reagent and may further include a buffer, a preservative, an osmotic pressure regulator, a chelating agent, etc.

The fifth and sixth reagents can be mixed with a sample at a volume ratio in accordance with a method for processing the sample in a conventional WNB channel. For example, the fifth reagent can be mixed with a sample at a volume ratio of 1 : 1, and the sixth reagent can be mixed with a sample at a volume ratio of 50 : 1.

The sub-samples may be treated sequentially in the same mixing chamber or in different mixing chambers.

S230: each sample to be tested is detected, in which the three samples to be tested are detected separately.

S231: the first sample to be tested is detected, which is the same as S30 in the above embodiments.

S232: the second sample to be tested is detected to obtain a scatter signal including a second side scatter intensity signal and a second fluorescence intensity signal from the first fluorescent dye, which is the same as an operation of a routine sample testing using a DIFF channel.

S233: the third sample to be tested is detected to obtain a scatter signal including a third side scatter intensity signal and a third fluorescence intensity signal from the second fluorescent dye, which is the same as an operation of a routine sample testing using a WNB channel.

In the detection operations, three samples to be tested are sequentially tested by an optical detection unit, so as to obtain an optical signal of particles in each sample to be tested. These optical signals are transmitted to a processor for the next operation.

Next, the particle information of each sample to be tested is obtained in S240.

S241: blast information is obtained according to the first side scatter intensity signal and the antibody fluorescence intensity signal for the first sample to be tested, which is the same as S40 in the above embodiments.

S243: particle information including at least lymphocytes, basophils and nucleated erythrocytes is obtained according to the third side scatter intensity signal and the third fluorescence intensity signal for the third sample to be tested, which is the same as an operation of a routine testing for a sample analysis using a WNB channel.

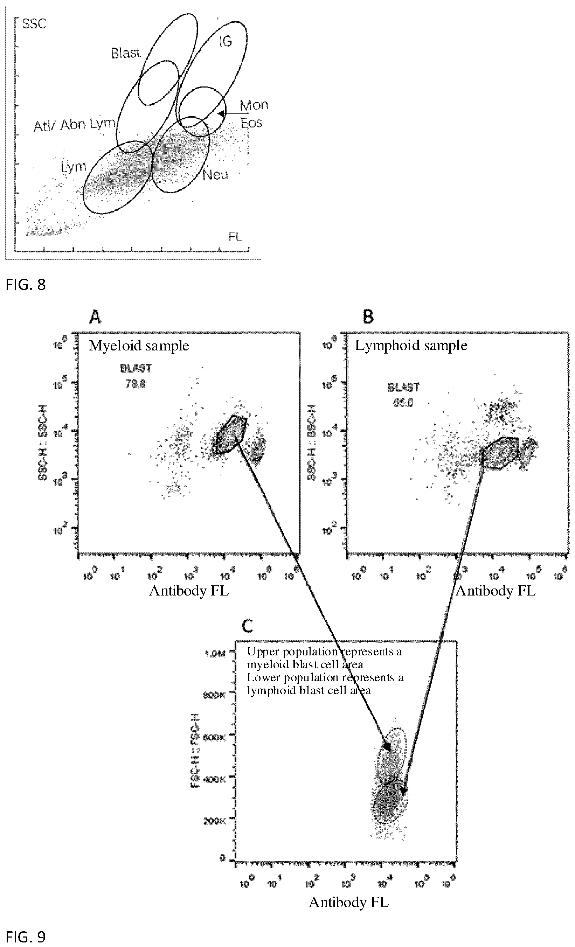

In the WNB channel, categorizations and counts of basophils and nucleated erythrocytes can be obtained, and accurate lymphocyte counts can also be obtained. Due to the characteristics of the second fluorescent dye used, even if the sample contains blasts, the blasts will not interfere with the categorizing and counting of lymphocytes. Reference can be made to FIG. 8, which is a schematic diagram showing a distribution of each particle swarm in a two-dimensional scatter diagram of fluorescence intensity-side scatter intensity obtained by WNB channel detection. As can be seen from FIG. 8, the position where blasts appear overlaps with abnormal lymphocytes, but can be well distinguished from normal lymphocytes. Therefore, an accurate percentage of lymphocyte for the third sample to be tested can be obtained in the WNB channel. In addition, particle populations of basophils and nucleated erythrocytes are not affected by blasts, so accurate respect count of basophils and nucleated erythrocytes can be obtained.

S242: obtaining particle information including at least lymphocytes, monocytes, neutrophils and eosinophils according to the second side scatter intensity signal and the second fluorescence intensity signal for the second sample to be tested, which is similar to the first embodiment, in which the differentiation of lymphocytes and monocytes in the four-part differential leukocytes may be disturbed by blasts, and thus categorizing and counting cannot be achieved.

In this embodiment, the following operations are further included for different situations of blast information.

S2421: when the proportion of blasts is measured to be 0%, that is, the sample does not contain blasts, categorizations and counts of neutrophils, eosinophils, monocytes and lymphocytes can be directly obtained according to the first side scatter intensity signal and the first fluorescence intensity signal.

S2422: when the proportion of blasts is measured to be greater than 0%, that is, the sample contains blasts, by combining with blast information obtained from the first sample to be tested and lymphocyte information obtained from the third sample to be tested, the effect of the blast information on the particle information of the second sub-sample is eliminated, and categorizations and counts of neutrophils, eosinophils, monocytes and lymphocytes are obtained.

In addition, in S2421 and S2422, immature granulocyte information and/or atypical lymphocyte information may be further obtained if the sample contains these cells.

According to the disclosure, information indicating whether blasts in the sample are myeloid blasts or lymphoid blasts can also be provided. Reference can be made to FIG. 9, which shows corresponding positions of respective blast particle populations from myeloid and lymphoid samples in two-dimensional scatter diagrams of antibody fluorescence intensity vs. side scatter intensity (antibody/SSC) in a two-dimensional scatter diagram of antibody fluorescence intensity vs..forward scatter intensity (antibody/FSC). It can be clearly seen from FIG. 9 that in an antibody/FSC two-dimensional scatter diagram, there is a clear positional relationship between blasts from a myeloid sample and blasts from a lymphoid sample. Therefore, blasts can be further determined to be myeloid blasts and/or lymphoid blasts according to an antibody fluorescence intensity signal and a forward scatter intensity signal.

In each of the above embodiments, a first forward scatter signal and a fluorescence intensity signal of particles of the first sample to be tested are further used to determine whether blasts in the sample to be tested are myeloid blasts and/or lymphoid blasts, or issue an alarm to indicate that the sample to be tested contains lymphoid blasts and/or myeloid blasts.

According to the disclosure, in each of the above embodiments, blasts in a sample to be tested can be directly counted without determining whether the sample contains blasts. Alternatively, when the presence of blasts is detected in a sample to be tested, an alarm is issued to indicate the presence of blasts in the sample to be tested, or an alarm is issued to indicate the presence of blasts in the sample to be tested and a count of blasts is output.

Further, the inventors also found that in a testing method using a fluorescently labeled antibody of the disclosure, in a scatter diagram of two-dimensional coordinates of side scatter intensity-antibody fluorescence intensity, categorization information of cells including lymphocytes, monocytes, neutrophils and eosinophils can be well distinguished (see FIG. 3B).

Based on this, in each of the above embodiments, the method for testing blasts of the disclosure further includes obtaining leukocyte categorization information in a sample according to a first side scatter intensity signal and an antibody fluorescence intensity signal obtained for the first sample to be tested, and the leukocyte information includes information of lymphocytes, monocytes, neutrophils and eosinophils. Further, the method includes respective count of lymphocytes, monocytes, neutrophils and eosinophils.

According to yet another embodiment of the disclosure, the sample analysis method further includes performing a routine testing on the sample.

The routine testing includes performing analysis, categorizations and counts on various cells in the sample to be tested, and also includes analyzing some biochemical indicators. According to some embodiments, the routine testing may be a routing blood testing in clinical practice. According to a specific embodiment, the routine testing may include performing a detection and analysis on erythrocytes, leukocytes, platelets, hemoglobin, etc.

If this routine testing indicates that a sample may contain blasts, one can select to initiate a detection of blasts; and if this routine testing indicates that a sample may not contain blasts, there is no need to initiate detection for blasts. This embodiment is suitable for subjects who are not confirmed to have a disease or are not suspected of having a disease, such as a large number of ordinary outpatients or patients undergoing health examinations, thereby saving time and cost of detections.

According to some embodiments, the sample analysis method of the disclosure includes subjecting the sample to a leukocyte testing using a DIFF channel. In this embodiment, the routine testing includes the following operations.

First, at least part of a sample is aspirated as a first initial sub-sample.

Next, the first initial sub-sample is processed, which includes mixing the first initial sub-sample with a third reagent and a fourth reagent to obtain a first initial sample to be tested, in which the third reagent and the fourth reagent are as described above.

Then, particles in the first initial sample to be tested are passed through a detection region of an optical detection unit one by one, and the particles in the first initial sample to be tested are irradiated with a light source of the optical detection unit to obtain a scatter signal and a fluorescence signal of the particles in the first initial sample to be tested, in which the scatter signal includes a first initial side scatter intensity signal from the first initial sample to be tested, and the fluorescence signal includes a first initial fluorescence signal from the first fluorescent dye.

Finally, particle information of the first initial sample to be tested is obtained according to the first initial side scatter intensity signal and the first initial fluorescence intensity signal, in which the particle information at least includes leukocyte information; and when the leukocyte information is abnormal, a blast alarm is issued. In this operation, as mentioned above, if the sample contains blasts, particle populations of lymphocytes and monocytes overlap with that of blasts in a two-dimensional scatter diagram of fluorescence intensity-side scatter intensity, resulting in impossible categorization of lymphocytes and monocytes. In this situation, an alarm indicating that the sample may contain blasts will be issued in the routine testing using a conventional blood analyzer.

Further, an operation instruction may be optionally issued by a user based on the alarm, or may be directly triggered by the alarm, and a blast testing may be performed according to any one of the methods in each of the above embodiments.

According to other embodiments, the sample analysis method of the disclosure includes subjecting the sample to a four-part differential leukocyte testing using a DIFF channel and nucleated erythrocyte, basophil and lymphocyte detections using a WNB channel. In this embodiment, the routine testing includes the following operations.

First, at least part of a sample is separately subjected to aspiration as a first initial sub-sample and a second initial sub-sample.

Next, the first and second initial sub-samples are processed separately, including mixing the first initial sub-sample with the third reagent and the fourth reagent to obtain a first initial sample to be tested, and mixing the second initial sub-sample with the fifth reagent and the sixth reagent to obtain a second initial sample to be tested, in which the third, fourth, fifth and sixth reagents are as described above respectively.

Then, particles in the first and second initial samples to be tested are separately passed through a detection region of an optical detection unit one by one, and the particles in the first and second initial samples to be tested are separately irradiated with a light source of the optical detection unit to obtain respective scatter signal and respective fluorescence signal of the particles in the first and second initial samples to be tested, in which the respective scatter signal includes a first initial side scatter intensity signal from the first initial sample to be tested and a second initial side scatter intensity signal from the second initial sample to be tested, and the respective fluorescence signal includes a first initial fluorescence signal from the first fluorescent dye in the first initial sample to be tested and a second initial fluorescence signal from the second fluorescent dye in the second initial sample to be tested.

Finally, particle information of the first initial sample to be tested is obtained according to the first initial side scatter intensity signal and the first initial fluorescence intensity signal, in which the particle information at least includes initial leukocyte information, and particle information of the second initial sample to be tested is obtained according to the second initial side scatter intensity signal and the second initial fluorescence intensity signal, in which the particle information at least includes initial lymph information; and when the initial leukocyte information is abnormal, a blast alarm is issued.

Based on the alarm, an operation instruction may be optionally issued so as to trigger a blast testing. In this embodiment, the blast testing of any of the above embodiments may be performed.

In addition, in this embodiment, it is also possible to perform only the blast detection as in the embodiment shown in FIG. 5. After the blast testing is completed, in conjunction with blast information obtained in the blast testing and initial lymphocyte information obtained in a routine testing, the effect of blasts on initial leukocyte information obtained in a routine testing is eliminated, and categorizations and counts of neutrophils, eosinophils, monocytes and lymphocytes are obtained. Further, immature granulocyte information and/or atypical lymphocyte information may also be obtained if the sample contains these cells.

The disclosure further provides a blood analyzer.

According to an embodiment, provided is a blood analyzer, including a sample aspiration device, a reagent supply device, a mixing chamber, a light source, an optical flow cell, an optical detector, a processor, and a non-transitory computer-readable storage medium programmed with a computer application program.

The sample aspiration device is configured to aspirate a sample and transfer the aspirated sample to the mixing chamber. A sample is aspirated a part thereof as needed for one or more tests in the various embodiments of the sample analysis method described above. For various tests, the sample aspiration device may aspirate a certain amount of sample at a time, divide the sample into a plurality of sub-samples, and process and test the sub-samples separately; and the sample aspiration device may also aspirate a certain amount of sample multiple times as respective sub-samples and process and test the sub-samples separately.

The reagent supply device is configured to provide a reagent and transfer the reagent to the mixing chamber. There may be a plurality of reagent supply devices for providing different reagents, respectively. As in various embodiments of the sample analysis method described above, the reagent supply devices are configured to provide one or more of, for example, a first reagent to a sixth reagent needed for the sample processing according to different testing requirements.

The mixing chamber is used for mixing and reaction of the sample and the reagents. There may also be more than one mixing chamber for processing the respective sub-samples needed for different tests. In addition, different sub-samples may be processed sequentially in the same mixing chamber.

The mixing chamber may be heated to a suitable reaction temperature to obtain an optimized processing effect of the sample.

The samples are processed with the appropriate reagents in the mixing chamber and then prepared to obtain a sample to be tested. The sample to be tested is transferred to a detection unit via a pipeline assembly. In this embodiment, the sample to be tested is transferred to an optical detection unit.

In this embodiment, the light source, the optical flow cell, the detection hole, and the optical detector are all components of the optical detection unit.

The light source is configured to align a light beam to the detection hole of the optical flow cell communicated with the mixing chamber. The light source is typically a laser with a wavelength either in a blue-light range or in a red-light range. According to the method of the disclosure, in combination with reagents provided for a blood analyzer (e.g., a third reagent containing a first fluorescent dye and/or a fifth reagent containing a second fluorescent dye), the fluorescence marker in a fluorescently labeled antibody suitable for a wavelength of the light source may be selected to perform the sample analysis.

The optical detector is configured to detect scatter signals and fluorescence signals of particles in the sample to be tested that pass through the detection hole one by one. The scatter signals include a forward scatter intensity signal collected by a forward scatter signal collecting device disposed on an optical axis, and a side scatter intensity signal collected by a side scatter signal collecting device disposed on a side of the optical axis. In addition, the optical detector further includes a fluorescence signal collecting device disposed on the side of the optical axis to collect the fluorescence intensity signal. Depending on different processing of the sample, the fluorescence signal collecting device collects the antibody fluorescence intensity signal emitted from a fluorescently labeled antibody that has been bound to a cell membrane surface and/or collect fluorescence intensity signals emitted from fluorescent dyes (e.g., the first or the second fluorescent dye) that have entered the interior of a cell to bind to nucleic acids or proteins.

The scatter signals and fluorescence signals of particles detected by the optical detector are transmitted to a processor for analysis.

The processor is operably connected to the optical detector, and when the computer application program in the non-transitory computer-readable storage medium is executed by the processor, the processor controls a time for mixing the reagents with the sub-samples in the mixing chamber; and the processor obtains the corresponding particle information based on the received scatter signals and antibody fluorescence signal, and performs the respective operations of obtaining the particle information for the various testing methods (e.g., a blast testing method and/or a routine testing method in any of the above embodiments). The operations of obtaining the particle information are the same as that in the foregoing method, and will not be repeated herein.

According to another embodiment of the disclosure, the blood analyzer may further include a hemoglobin testing unit and an impedance counting detection unit.

The hemoglobin testing unit is used for hemoglobin testing. The impedance counting detection unit is used for erythrocyte and/or platelet testing.

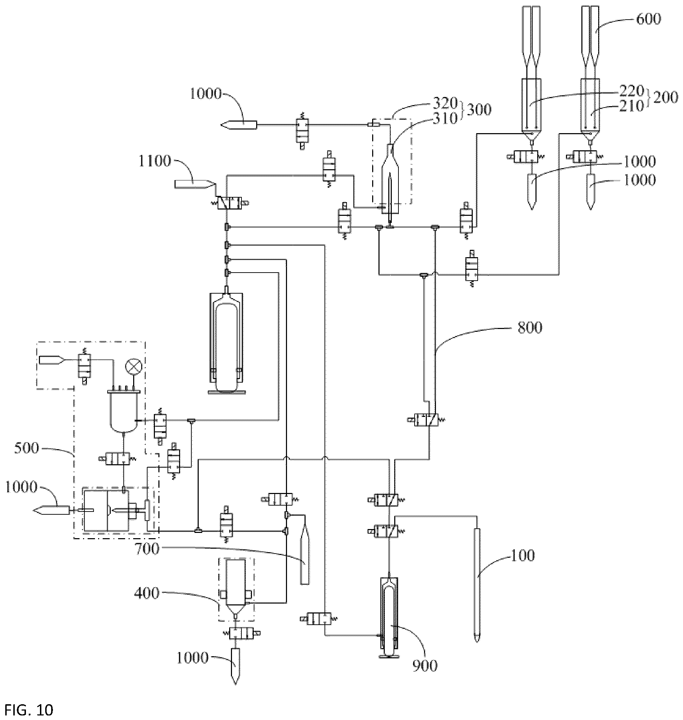

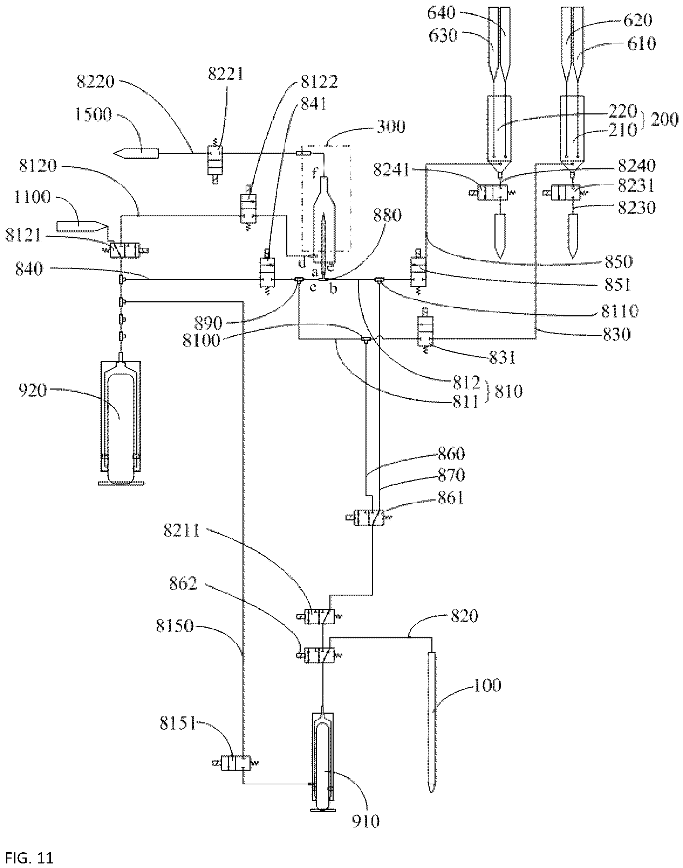

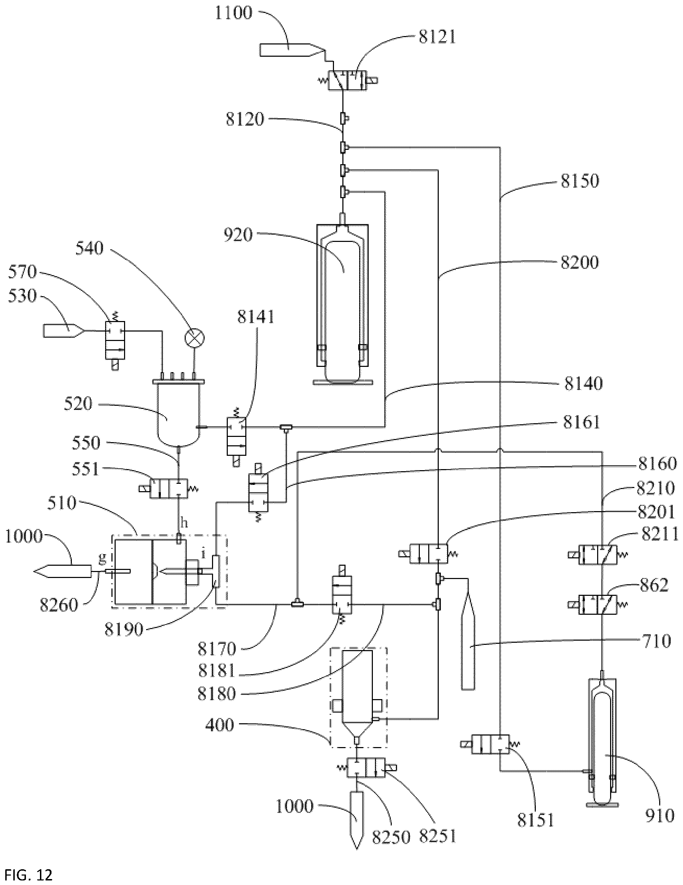

With reference to FIGS. 10 to 12 below, a blood analyzer according to specific embodiments of the disclosure is described. It should be known to a person skilled in the art that the blood analyzer for use in the disclosure is not limited to the embodiments detailed below.

In this embodiment, the blood analyzer includes a sample aspiration device 100, an optical channel mixing chamber 200, an optical detection unit 300, a hemoglobin testing unit 400, an impedance counting detection unit 500, a first reagent supply device 600, a second reagent supply device 700, a transfer pipeline assembly 800, a fluid power device 900, a waste liquid cell 1000, a diluent supply device 1100, a processor and a non-transitory computer-readable storage medium (not shown) programmed with a computer application program. The sample aspiration device 100, the optical channel mixing chamber 200, the optical detection unit 300, the hemoglobin testing unit 400, the impedance counting detection unit 500, the first reagent supply device 600, the second reagent supply device 700, the waste liquid cell 1000, the diluent supply device 1100, and the fluid power device 900 are connected to form a liquid circuit system via the transfer pipeline assembly 800.

In this embodiment, the fluid power device 900 includes a first syringe 910 and a second syringe 920. The first syringe 900 has a range less than that of the second syringe 920. The first syringe 910 is reused to provide power for sampling, blood dispensing (sample dispensing), and sample injection (including optical channel injection and sheath flow impedance injection). The second syringe 920 is reused to provide power for sample dilution, cleaning of components through which samples flow, sample preparation, filling of the impedance counting detection unit 500, and sheath liquid injection in optical detection. In this embodiment, the fluid power device 900 is effectively reused with only two syringes, achieving the purpose of reducing the cost and size of the instrument.

Preferably, each of the first syringe 910 and the second syringe 920 is driven by an independent power mechanism. Specifically, the fluid power device 900 further includes a first motor (not shown) for driving an action of the first syringe 910 and a second motor (not shown) for driving an action of the second syringe 920, and the first motor and the second motor are two motors provided separately from each other. The step length of the second motor is preferably greater than the step length of the first motor.

The optical detection unit 300 includes a flow cell 310 and an optical detection element 320. The flow cell 310 has a detection region, a diluent inlet d, a sample inlet e, and a first outlet f and the diluent inlet d. The sample inlet e, and the first outlet f are connected to the detection region, respectively. The detection region serves for passage of an optical detection sample under thronging of a diluent. The optical detection element 320 includes a light source, a forward scatter signal collecting device disposed on an optical axis, and a side scatter signal collecting device and a fluorescence signal collecting device both disposed on the side of the optical axis.

The optical channel mixing chamber 200 is configured to provide a reaction site for the sample to be tested and the reagents to prepare an optical sample to be tested.

In this embodiment, the optical channel mixing chamber 200 includes a first mixing chamber 210 and a second mixing chamber 220, and the first mixing chamber 210 and the second mixing chamber 220 are two separate mixing chambers, i.e., the number of the optical channel mixing chambers 200 is two. The first mixing chamber 210 is configured to provide a reaction site for, for example, a first sub-sample with testing reagents (e.g., a first and a second reagent, or a first, a second and a third reagent) to prepare a first sample to be tested. The second mixing chamber 220 is configured to provide a reaction site for a second sub-sample with testing reagents (e.g., a third and a fourth reagent) to prepare a second sample to be tested. In this embodiment, the preparation of two sub-samples in two separate mixing chambers is illustrated as an example. According to the foregoing method, the blood analyzer of some embodiments of the disclosure may further include a third mixing chamber for processing a third sub-sample. The analyzer having a plurality of mixing chambers may, on the one hand, solve the problem of cross-contamination due to reagent residues when one mixing chamber is shared; and on the other hand, prepare multiple sub-samples simultaneously, which is conducive to improving the testing efficiency.

The transfer pipeline assembly 800 includes an optical sample preparation pipeline 810, a sampling transfer pipe 820, a first connection pipeline 830, a second connection pipeline 840, a third connection pipeline 850, a fourth connection pipeline 860, a fifth connection pipeline 870, a first connector 880, a second connector 890, a third connector 8100, a fourth connector 8110, a first diluent transfer pipeline 8120, a third diluent transfer pipeline 8140, a fourth diluent transfer pipeline 8150, a first transfer pipeline 8160, an impedance counting sample preparation pipeline 8170, a second transfer pipeline 8180 and a seventh connector 8190, a second diluent transfer pipeline 8200, a third transfer pipeline 8210, a first liquid discharge pipeline 8220, a second liquid discharge pipeline 8230, a third liquid discharge pipeline 8240, a fourth liquid discharge pipeline 8250 and a fifth liquid discharge pipeline 8260. The optical sample preparation pipeline 810 is connected to the sample inlet e, the optical channel mixing chamber 200, the first syringe 910 and the second syringe 920, respectively. The first diluent transfer pipeline 8120 is connected to the diluent inlet d and the diluent supply device 1100, respectively. The second diluent transfer pipeline 8200 is connected to the diluent supply device 1100, the hemoglobin testing unit 400 and the second syringe 920, respectively. The third diluent transfer pipeline 8140 is connected to the diluent supply device 1100, the impedance counting detection unit 500 and the second syringe 920, respectively.

The diluent supply device 1100 is configured to provide a diluent. The second syringe 920 is connected to the diluent supply device 1100 and the diluent inlet d, respectively, through the first diluent transfer pipeline 8120 for transferring the diluent from the diluent supply device 1100 to the flow cell 310. The second syringe 920 is connected to the optical sample preparation pipeline 810 for transferring an optical detection sample from the optical channel mixing chamber 200 into the optical sample preparation pipeline 810. The second syringe 920 is further connected to the diluent supply device 1100 and the hemoglobin testing unit 400 through the second diluent transfer pipeline 8200, respectively, for transferring the diluent from the diluent supply device 1100 to the hemoglobin testing unit 400. The second syringe 920 is further connected to the diluent supply device 1100 and the impedance counting detection unit 500, respectively, through the third diluent transfer pipeline 8140 for transferring the diluent from the diluent supply device 1100 to the impedance counting detection unit 500.

The sample aspiration device 100 is configured to collect a sample to be tested. In this embodiment, the sample to be tested is a blood sample, but of course, as an alternative solution, the sample to be tested may also be a body fluid sample. The sampling transfer pipe 820 is connected between the first syringe 910 and the sample aspiration device 100. The first syringe 910 is connected to the sample aspiration device 100 for driving the sample aspiration device 100 to aspirate a sample to be tested (i.e., sampling) and to transfer the sample to be tested within the sample aspiration device 100 into the hemoglobin testing unit 400 and the optical channel mixing chamber 200 (i.e., blood dispensing) for reaction, respectively. The sample aspiration device 100 may be a sampling needle or a sampling pipette, or the like. The blood analyzer further includes a power element (not shown) for driving the sample aspiration device 100 to move, and the sample aspiration device 100 may be driven by the power element to move to a sample storage container (e.g., a test tube) for sampling, then to move to the optical channel mixing chamber 200 and the hemoglobin testing unit 400, respectively, and is driven by the first syringe 910 for blood dispensing.

The first syringe 910 is connected to the sample inlet e through the optical sample preparation pipeline 810 for transferring the optical detection sample from the optical sample preparation pipeline 810 into the flow cell 310.

During the blast testing, the second syringe 920 is configured to transfer the first sample to be tested from the first mixing chamber 210 to the optical sample preparation pipeline 810 and transfer the diluent into the flow cell 310. The first syringe 910 is configured to transfer the first sample to be tested from the optical sample preparation pipeline 810 into the flow cell 310. The optical detection element 320 is configured to perform blast detection on the first sample to be tested that passes through the detection region under thronging of the diluent, and obtain blast testing results based on the scatter signal and the antibody fluorescence signal.

During the leukocyte categorization testing, the first syringe 910 is configured to transfer the second sample to be tested from the optical sample preparation pipeline 810 into the flow cell 310 and to transfer the diluent into the flow cell 310; and the second syringe 920 is configured to transfer the second sample to be tested from the second mixing chamber 200 into the optical sample preparation pipeline 810. The optical detection element 320 is configured to perform a leukocyte categorization testing on the second sample to be tested that passes through the detection region under thronging of a sheath liquid.

The first reagent supply device 600 is configured to provide reagents to the optical channel mixing chamber 200. In this embodiment, the first reagent supply device 600 includes a first metering pump 610, a second metering pump 620, a third metering pump 630, and a fourth metering pump 640.

The first metering pump 610 is connected to the first mixing chamber 210 to supply the first reagent to the first mixing chamber 210; and the second metering pump 620 is connected to the first mixing chamber 210 to supply the second reagent to the first mixing chamber 210. As a preferred solution of this embodiment, the first reagent contains a hemolytic agent and the second reagent contains a fluorescently labeled antibody. The fluorescently labeled antibody reagent enables the optical detection unit 300 to obtain the antibody fluorescence signal during the blast testing, and the hemolytic agent is mainly used for fragmenting erythrocytes. In specific applications, as an alternative solution, the first reagent and the second reagent may also be replaced with a reagent including both a hemolytic agent and a fluorescently labeled antibody. In this alternative solution, there is only one metering pump connected to the first mixing chamber 210, for example, the first metering pump 610.

The third metering pump 630 is connected to the second mixing chamber 220 to supply a third reagent to the second mixing chamber 220; and the fourth metering pump 640 is connected to the second mixing chamber 220 to supply a fourth reagent to the second mixing chamber 220. The third reagent contains a second hemolytic agent and the fourth reagent contains a first fluorescent dye. In specific applications, as an alternative solution, the second hemolytic agent and the first fluorescent dye may also be contained in a single reagent, and in this alternative solution, there is only one metering pump connected to the second mixing chamber 220, for example, the third metering pump 630.

The hemoglobin testing unit 400 is configured to provide a reaction site for the sample to be tested and, for example, a seventh reagent to prepare a hemoglobin testing sample, to provide a reaction site for the sample to be tested and the diluent to prepare an impedance counting detection sample, and to measure a hemoglobin concentration in the hemoglobin testing sample. In this embodiment, the hemoglobin testing unit 400 is used as an impedance counting detection sample preparation unit in addition to being used as a preparation unit and detection unit for a hemoglobin testing sample, i.e., the impedance counting detection sample preparation unit and the hemoglobin testing unit 400 are arranged integrally. In a specific operation, the sample to be tested and the diluent are added first in the hemoglobin testing unit 400 for reaction to obtain an impedance counting detection sample, and part of the impedance counting detection sample is aspirated; and the seventh reagent is then added to the hemoglobin testing unit 400 to prepare a hemoglobin testing sample.

The second reagent supply device 700 is configured to provide the seventh reagent to the hemoglobin testing unit 400, and includes a fifth metering pump 710 connected to the hemoglobin testing unit 400. The fifth reagent is, for example, a hemolytic agent capable of lysing erythrocytes in a blood sample, releasing hemoglobin from the erythrocytes, and converting hemoglobin to methemoglobin. In an alternative solution, a reagent used in the leukocyte categorization testing and a reagent used in the hemoglobin testing is a same hemolytic agent, i.e., a metering pump for adding the reagent to the second mixing chamber 220 and a metering pump for adding the reagent to the hemoglobin testing unit 400 are the same component.

The optical sample preparation pipeline 810 is disposed between the flow cell 310 and the optical channel mixing chamber 200. The second syringe 920 is connected to the optical sample preparation pipeline 810 to transfer an optical detection sample from the optical channel mixing chamber 200 into the optical sample preparation pipeline 810. The first syringe 910 is connected to the sample inlet e through the optical sample preparation pipeline 810 to transfer the optical detection sample from the optical sample preparation pipeline 810 into the flow cell 310.

In this embodiment, the optical sample preparation pipeline 810 includes a first sample preparation pipeline 811 and a second sample preparation pipeline 812, that is, there are two optical sample preparation pipelines 810, and the first sample preparation pipeline 811 and the second sample preparation pipeline 812 are two separate pipelines. The first sample preparation pipeline 811 is connected to the first mixing chamber 210, the flow cell 310, the first syringe 910 and the second syringe 920; and the second sample preparation pipeline 812 is connected to the second mixing chamber 220, the flow cell 310, the second mixing chamber 220, the first syringe 910 and the second syringe 920. During the blast testing, the second syringe 920 is configured to transfer the first sample to be tested from the first mixing chamber 210 into the first sample preparation pipeline 811 and transfer the sheath liquid into the flow cell 310, and the first syringe 910 is configured to transfer the first sample to be tested from the first sample preparation pipeline 811 into the flow cell 310. In the process of performing the leukocyte categorization testing, the second syringe 920 transfers the second sample to be tested from the second mixing chamber 220 into the second sample preparation pipeline 812 and transfers the sheath liquid into the flow cell 310, and the first syringe 910 is configured to transfer the second sample to be tested from the second sample preparation pipeline 812 into the flow cell 310. In this embodiment, separate mixing chambers and separate sample preparation pipelines are used for the blast testing and the leukocyte categorization testing, respectively, which is conducive to reducing cross-contamination. In specific applications, the number of mixing chambers included in the optical channel mixing chamber 200 is not limited to two.

The first sample preparation pipeline 811 is connected to the flow cell 310 at one end, and to the first mixing chamber 210 via the first connection pipeline 830 at the other end. The second sample preparation pipeline 812 is connected to the flow cell 310 at one end, and to the second mixing chamber 220 via the third connection pipeline 850 at the other end. The second syringe 920 is connected to the first sample preparation pipeline 811 and the second sample preparation pipeline 812 via the second connection pipeline 840. The first syringe 910 is connected to the first sample preparation pipeline 811 via the fourth connection pipeline 860 and connected to the second sample preparation pipeline 812 via the fifth connection pipeline 870.

The first connection pipeline 830 is provided with a first controllable valve 831, the second connection pipeline 840 is provided with a second controllable valve 841, and the third connection pipeline 850 is provided with a third controllable valve 851. When the first control valve 8121, the second controllable valve 841 and the first controllable valve 831 are opened, the second syringe 920 may transfer a diluent to the first mixing chamber 210. When the first control valve 8121 is closed and the second controllable valve 841 and the first controllable valve 831 are opened, the second syringe 920 may transfer a blast testing sample from the first mixing chamber 210 to the first sample preparation pipeline 811. When the first control valve 8121, the second controllable valve 841, and the third controllable valve 851 are opened, the second syringe 920 may transfer the diluent into the second mixing chamber 220; and when the first control valve 8121 is closed and the second controllable valve 841 and the third controllable valve 851 are opened, the second syringe 920 may transfer a leukocyte categorization testing sample from the second mixing chamber 220 to the second sample preparation pipeline 812.

The fourth connection pipeline 860 is connected to the first syringe 910 at one end, and to the first sample preparation pipeline 811 at the other end. The fourth connection pipeline 860 is provided with a sixth control valve 861. The fifth connection pipeline 870 is connected to the sixth control valve 861 at one end, and to the second sample preparation pipeline 812 at the other end. The sixth control valve 861 may control the first syringe 910 to switch to be connected to the first sample preparation pipeline 811 and to the second sample preparation pipeline 812. As an alternative solution, the fourth connection pipeline 860 and the fifth connection pipeline 870 may also be respectively connected to the first syringe 910 via two separate control valves.

Preferably, in this embodiment, the fourth connection pipeline 860 is further provided with a fifth controllable valve 862, the fifth controllable valve 862 is arranged between the first syringe 910 and the fourth controllable valve 861, and the sample aspiration device 100 is connected to the first syringe 910 via the fifth controllable valve 862. The sampling transfer pipe 820 is connected to the sample aspiration device 100 at one end, and to the fifth controllable valve 862 at the other end. The fifth controllable valve 862 may control the first syringe 910 to switch to be connected to the sample aspiration device 100 and the sample preparation pipeline, respectively. As an alternative solution, the sample preparation pipeline and the sample aspiration device 100 may also be respectively connected to the first syringe 910 via two separate controllable valves.

The first connector 880 has a first port a, a second port b, and a third port c in communication with one another. The first port a is connected to the sample inlet e of the flow cell 310, and the third port c is connected to the second syringe 920 via the second connection pipeline 840. One of the first sample preparation pipeline 811 and the second sample preparation pipeline 812 is connected between the second port b and the optical channel mixing chamber 200, and the other of the first sample preparation pipeline 811 and the second sample preparation pipeline 812 is connected to the optical channel mixing chamber 200 at one end and to each of the second syringe 920 and the third port c at the other end. The fourth connection pipeline 860 is connected to the first sample preparation pipeline 811 and the first connection pipeline 830 via the third connector 8100. The fifth connection pipeline 870 is connected to the second sample preparation pipeline 812 and the third connection pipeline 850 via the fourth connector 8110. Both the third connector 8100 and the fourth connector 8110 are preferably tee joints, that is, the first syringe 910 is connected to two optical sample preparation pipelines 810 via two tee joints.

In this embodiment, the second connection pipeline 840 is also connected to each of the second syringe 920 and the diluent supply device 1100 via the first diluent transfer pipeline 8120, that is, one end of the second connection pipeline 840 is connected to each of the first sample preparation pipeline 811 and the second sample preparation pipeline 812t, and the other end thereof is connected to the first diluent transfer pipeline 8120. The second syringe 920 is further configured to transfer the diluent from the diluent supply device 1100 to the optical sample preparation pipeline 810 and the optical channel mixing chamber 200. In this way, the second syringe 920 may supply power for the diluent to clean the first sample preparation pipeline 811, the second sample preparation pipeline 812, the first mixing chamber 210 and the second mixing chamber 220.

The first diluent transfer pipeline 8120 is connected to the diluent inlet d of the flow cell 310 at one end and to the second syringe 920 at the other end, and the diluent supply device 1100 and the second connection pipeline 840 are respectively connected to the first diluent transfer pipeline 8120. The first diluent transfer pipeline 8120 is provided with a first control valve 8121 and a second control valve 8122. The first control valve 8121 is disposed near the second syringe 920, the second control valve 8122 is disposed near the diluent inlet d, and the diluent supply device 1100 is connected to the first control valve 8121. The first control valve 8121 and the second control valve 8122 may control the opening and closing of the first diluent transfer pipeline 8120. In specific applications, when the first control valve 8121 and the second control valve 8122 are opened, the second syringe 920 pushes the sheath liquid into the flow cell 310; and when the first control valve 8121 and the second control valve 8122 are closed, the second syringe 920 does not push the sheath liquid into the flow cell 310.

The second syringe 920 is connected to each of the diluent supply device 1100 and the first syringe 910 via the fourth diluent transfer pipeline 8150 to transfer the diluent from the diluent supply device 1100 to the first syringe 910. Specifically, the fourth diluent transfer pipeline 8150 is connected between the first diluent transfer pipeline 8120 and the first syringe 910. The fourth diluent transfer pipeline 8150 is provided with a fifth control valve 8151. When the first control valve 8121 and the fifth control valve 8151 are opened, the second syringe 920 transfers the diluent to the first syringe 910 so as to clean the first syringe 910, the sample aspiration device 100 and the sampling transfer pipe 820.

The impedance counting detection unit 500 is configured to perform an impedance counting detection on the impedance counting detection sample, and the impedance counting detection may include an erythrocyte counting detection and/or a platelet counting detection. The impedance counting detection sample may be prepared by a reaction between the sample to be tested and the diluent.

The impedance counting detection unit 500 includes an impedance counting detection device 510, a diluent reservoir 520, a positive pressure power source 530, a pressure sensor 540, and a fifth diluent transfer pipeline 550. The fifth diluent transfer pipeline 550 is provided with a sixth control valve 551. The positive pressure power source 530 and the pressure sensor 540 are respectively connected to the diluent reservoir 520, in which the positive pressure power source 530 is connected to the diluent reservoir 520 via an air valve 570. The diluent reservoir 520 is connected to the impedance counting detection device 510 via the fifth diluent transfer pipeline 550, and is connected to the second syringe 920 and the diluent supply device 1100 via the third diluent transfer pipeline 8140. One end of the impedance counting sample preparation pipeline 8170 is connected to the impedance counting detection device 510 and is connected to the second syringe 920 via the first transfer pipeline 8160. The other end of the impedance counting sample preparation pipeline 8170 is connected to the hemoglobin testing unit 400 via the second transfer pipeline 8180 and is connected to the first syringe 910 via the third transfer pipeline 8210. The second syringe 920 is further configured to transfer the diluent from the diluent supply device 1100 to the diluent reservoir 520 and to transfer the impedance counting detection sample from the hemoglobin testing unit 400 to the impedance counting sample preparation pipeline 8170. The positive pressure power source 530 is configured to transfer the diluent from the diluent reservoir 520 to the impedance counting detection device 520 such that the impedance counting detection sample flows within the impedance counting detection device 520 under thronging of the diluent. The first syringe 910 is further configured to transfer the impedance counting detection sample from the impedance counting sample preparation pipeline 8170 to the impedance counting detection device 510.

Specifically, the third diluent transfer pipeline 8140 is connected to the first diluent transfer pipeline 8120 at one end, and to the diluent reservoir 520 at the other end; and the first transfer pipeline 8160 is connected to the third diluent transfer pipeline 8140 at one end, and to each of the impedance counting sample preparation pipeline 8170 and the impedance counting detection device 510 at the other end. The first transfer pipeline 8160 is provided with a seventh control valve 8161, the third diluent transfer pipeline 8140 is provided with a fourth control valve 8141, and the fifth diluent transfer pipeline 550 is provided with a sixth control valve 551. When the first control valve 8121 and the fourth control valve 8141 are opened, the second syringe 920 transfers the diluent towards the diluent reservoir 520 to fill it; and when the air valve 570 and the sixth control valve 551 are opened, the positive pressure power source 530 transfers the sheath liquid from the diluent reservoir 520 into the impedance counting detection device 510. In this embodiment, the third diluent transfer pipeline 8140 is indirectly connected to the diluent supply device 1100 and the second syringe 920 via the first diluent transfer pipeline 8120. In specific applications, as an alternative solution, the third diluent transfer pipeline 8140 may also be directly connected to the diluent supply device 1100 and the second syringe 920.

One end of the impedance counting sample preparation pipeline 8170 is connected to each of the impedance counting detection device 510 and the first transfer pipeline 8160 via a seventh connector 8190, and the other end thereof is connected to each of the second transfer pipeline 8180 and the third transfer pipeline 8210. The second transfer pipeline 8180 is connected between the impedance counting sample preparation pipeline 8170 and the hemoglobin testing unit 400. The second transfer pipeline 8180 is provided with an eighth control valve 8181. When the seventh control valve 8161 and the eighth control valve 8181 are opened, the second syringe 920 transfers the impedance counting detection sample from the hemoglobin testing unit 400 into the impedance counting sample preparation pipeline 8170.

The impedance counting detection device 510 has a front cell (not shown), a rear cell (not shown), a gem hole (not shown), a second inlet h, a first inlet i, and a second outlet g. The second inlet h and the first inlet i are respectively connected to the front cell, the gem hole is configured to connect the front cell to the rear cell, and the second outlet g is connected to the rear cell. The second inlet h is connected to the fifth diluent transfer pipeline 550, the first inlet i is connected to each of the first transfer pipeline 8160 and the impedance counting sample preparation pipeline 8170 via the seventh connector 8190, and the second outlet g is connected to the waste liquid cell 1000.

The second diluent transfer pipeline 8200 is connected between the first diluent transfer pipeline 8120 and the hemoglobin testing unit 400, the impedance counting sample preparation pipeline 8170 is connected to one end of the third transfer pipeline 8210 and one end of the second transfer pipeline 8180, and the other end of the third transfer pipeline 8210 is connected to the first syringe 910, and the other end of the second transfer pipeline 8180 is connected to the second diluent transfer pipeline 8200. The second diluent transfer pipeline 8200 is provided with a third control valve 8201, the fifth metering pump 710 is connected to the second diluent transfer pipeline 8200, and connection points of the fifth metering pump 710 and the second transfer pipeline 8180 on the second diluent transfer pipeline 8200 are all located between the third control valve 8201 and the hemoglobin testing unit 400. When the first control valve 8121 and the third control valve 8201 are opened, the second syringe 920 transfers the diluent to the hemoglobin testing unit 400. In this embodiment, the second diluent transfer pipeline 8200 is indirectly connected to the diluent supply device 1100 and the second syringe 920 via the first diluent transfer pipeline 8120. In specific applications, as an alternative solution, the second diluent transfer pipeline 8200 may be directly connected to the diluent supply device 1100 and the second syringe 920.

The third transfer pipeline 8210 is provided with a ninth control valve 8211, and the fifth controllable valve 862 is arranged between the ninth control valve 8211 and the first syringe 910. The fourth connection pipeline 860 is connected to the ninth control valve 8211. The fifth controllable valve 862 controls the opening and closing of a channel between the first syringe 910 and the sampling transfer pipe 820 and the opening and closing of a channel between the first syringe 910 and the ninth control valve 8211. That is, by regulating the fifth controllable valve 862, it may be switched to a state in which the first syringe 910 is connected to the sampling transfer pipe 820 and switched to a state in which the first syringe 910 is connected to the sample preparation pipeline (including the optical sample preparation pipeline 810 and the impedance counting sample preparation pipeline 8170). With the cooperation of the ninth control valve 8211 and the fifth controllable valve 862, the state of opening and closing of a channel between the first syringe 910 and the impedance counting sample preparation pipeline 8170 is controlled. With the cooperation of the sixth control valve 861, the ninth control valve 8211, and the fifth controllable valve 862, the state of opening and closing of a channel between the first syringe 910 and the first sample preparation pipeline 811 as well as the second sample preparation pipeline 812 is controlled.

In this embodiment, the first syringe 910 is connected to each of the impedance counting sample preparation pipeline 8170 and the optical sample preparation pipeline 810 via the ninth control valve 8211. In specific applications, as an alternative solution, the optical sample preparation pipeline 810 and the impedance counting sample preparation pipeline 8170 may also be connected to the first syringe 910 through separate control valves, respectively.

The first liquid discharge pipeline 8220 is connected between the first outlet f of the flow cell 310 and the waste liquid cell 1000, and the first liquid discharge pipeline 8220 is provided with a first liquid discharge control valve 8221. During the blast testing and leukocyte categorization testing, the first liquid discharge control valve 8221 is opened such that a liquid of the reticulocyte testing sample and the diluent or the leukocyte categorization testing sample and the diluent that flows out of the flow cell 310 through the detection region is transferred to the waste liquid cell 1000.

The second liquid discharge pipeline 8230 is connected between the first mixing chamber 210 and the waste liquid cell 1000, and the second liquid discharge pipeline 8230 is provided with a second liquid discharge control valve 8231. After the second liquid discharge control valve 8231 is opened, the first mixing chamber 210 is emptied, so that during cleaning of the first mixing chamber 210, a cleaning waste liquid is discharged to the waste liquid cell 1000.

The third liquid discharge pipeline 8240 is connected between the second mixing chamber 220 and the waste liquid cell 1000, and the third liquid discharge pipeline 8240 is provided with a third liquid discharge control valve 8241. After the third liquid discharge control valve 8241 is opened, the second mixing chamber 220 is emptied, so that during cleaning of the second mixing chamber 220, the cleaning waste liquid is discharged to the waste liquid cell 1000.

A fourth liquid discharge pipeline 8250 is connected between the hemoglobin testing unit 400 and the waste liquid cell 1000, and the fourth liquid discharge pipeline 8250 is provided with a fourth liquid discharge control valve 8251. After the fourth liquid discharge control valve 8251 is opened, the hemoglobin testing unit 400 is emptied, so that during cleaning of the hemoglobin testing unit 400, the cleaning waste liquid is discharged to the waste liquid cell 1000.

The fifth liquid discharge pipeline 8260 is connected between the second outlet g of the impedance counting detection device 510 and the waste liquid cell 1000. During the impedance counting detection, the impedance counting detection sample and sheath liquid flowing out of the second outlet g of the impedance counting detection device 510 is discharged to the waste liquid cell 1000.

It should be noted that there is only one waste liquid cell 1000, i.e., the first liquid discharge pipeline 8220, the second liquid discharge pipeline 8230, the third liquid discharge pipeline 8240, the fourth liquid discharge pipeline 8250, and the fifth liquid discharge pipeline 8260 are connected to the same waste liquid cell 1000. As an alternative solution, there may be two or more waste liquid cells 1000, and at least two of the first liquid discharge pipeline 8220, the second liquid discharge pipeline 8230, the third liquid discharge pipeline 8240, the fourth liquid discharge pipeline 8250, and the fifth liquid discharge pipeline 8260 are connected to different waste liquid cells 1000.

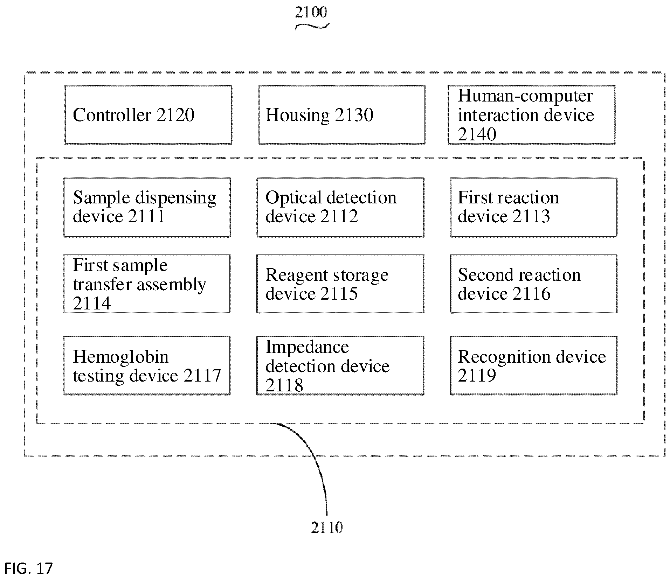

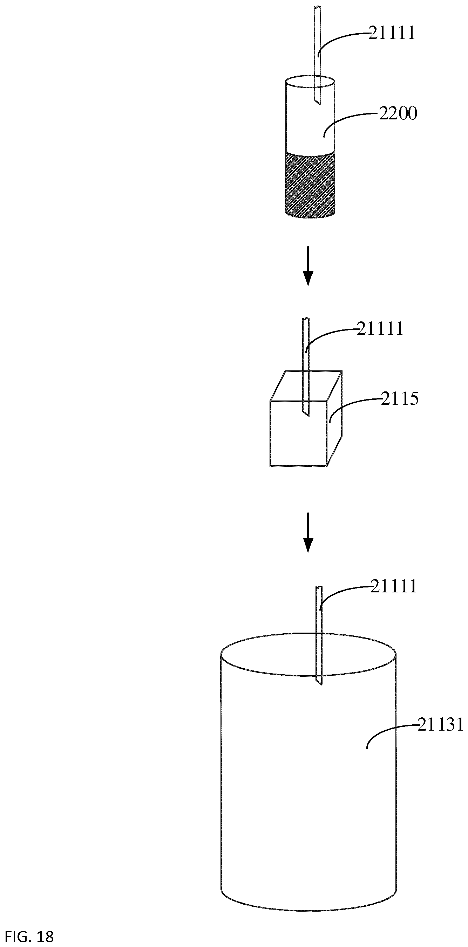

With reference to FIGS. 17 to 18 below, a sample analyzer 2100 according to another specific embodiment of the disclosure is described.

The sample analyzer 2100 provided in this embodiment focuses on protection of a solution of an integrated device for implementing both a blast testing and a routine blood testing.

Specifically, the sample analyzer 2100 provided in this embodiment includes a sample dispensing device 2111, an optical detection device 2112, a first reaction device 2113, a second reaction device 2116, a first sample transfer assembly 2114 and a controller 2120. The sample dispensing device 2111 is configured to aspirate a sample from a sample container 2200 and dispense at least part of the aspirated sample to the first reaction device 2113 and/or the second reaction device 2116. The first reaction device 2113 is configured to provide at least a reaction site for the sample, an antibody reagent and a first hemolytic reagent to prepare a first sample to be tested, in which the antibody in the antibody reagent is capable of binding to an antigen of a surface of a blast in the sample. The second reaction device 2116 is configured to provide at least a reaction site for the sample with a first type of reagents to prepare a second sample to be tested. The first sample transfer assembly 2114 is configured to transfer the first sample to be tested from the first reaction device 2113 to the optical detection assembly and transfer the second sample to be tested from the second reaction device 2116 to the optical detection assembly. The optical detection assembly includes a flow cell, a light emitting component and a light receiving component, in which the flow cell is configured to pass the first sample to be tested or the second sample to be tested through under thronging of a sheath liquid, the light emitting component is configured to emit light towards the first sample to be tested or the second sample to be tested in the flow cell, and the light receiving component is configured to receive a first optical signal generated when light emitted by the light emitting component passes through the first sample to be tested and receive a second optical signal generated when the light emitted by the light emitting component passes through the second sample to be tested. The controller 2120 is configured to: obtain first particle information of the first sample to be tested through parsing the first optical signal fed back from the light receiving component, in which the first particle information includes blast information; and obtain second particle information of the second sample to be tested through parsing the second optical signal fed back from the light receiving component, in which the second particle information includes neutrophil information, eosinophil information, monocyte information and lymphocyte information. In this embodiment, separate sites are provided for the blast testing and the leukocyte categorization testing, so that the reaction in the leukocyte testing and the reaction in the blast testing may be carried out at the same time, which is conducive to improving the testing flux. The leukocyte categorizing and counting detection and the blast counting detection share one optical detection device 2112, and thus the cost is low. In the blast testing of this embodiment, since manual dispensing of samples is not required, it has the advantages of having a high automation and simple operation, being time-saving and labor-saving, and achieving a high efficiency, and eliminates the potential risk of errors in artificial quantification. In addition, in this embodiment, the reaction between the sample and the antibody reagent in the blast testing is carried out by providing a fixed first reaction device 2113 in the sample analyzer 2100, and there is no need to provide an empty sample container 2200 outside the sample analyzer 2100 for the reaction between the sample and the antibody reagent, thus reducing the unnecessary consumption of the sample container 2200.

As an embodiment, the sample analyzer 2100 further includes a housing 2130, the optical detection device 2112, the first reaction device 2113 and the second reaction device 2116 all being located within the housing 2130. In this solution, the antibody reaction of the blast testing is carried out inside the sample analyzer 2100, and there is no need to provide an empty sample container 2200 outside the sample analyzer 2100 for the reaction between the sample and the antibody reagent, thus reducing the unnecessary consumption of the sample container 2200.

As an embodiment, the sample analyzer 2100 further includes a reagent storage device 2115, which is configured to store at least a first reagent container. The first reagent container is configured to contain an antibody reagent. The reagent storage device 2115 is disposed within the housing 2130. In this solution, the antibody reagent is also stored in the sample analyzer 2100.

As an embodiment, the controller 2120 is further configured to: control the amount of the sample dispensed to the first reaction device 2113 by the sample dispensing device 2111 to be less than or equal to 60 µL during a sample dispensing process of a single blast testing item. By an optimized design of the preparation method of the sample to be tested in the blast testing and an optimized design of the analysis of blast testing results, the amount of the sample used in a single blast testing item may be reduced to be less than or equal to 60 µL on the premise of the accurate results of the blast testing, which significantly reduces the amount of sample used in the blast testing compared to a conventional flow cytometer that requires at least 100 µL of sample.

As an embodiment, the controller 2120 is further configured to: control the amount of sample dispensed by the sample dispensing device 2111 to the first reaction device 2113 to be 50 µL ± 10 µL during the sample dispensing process of the single blast testing item. It can be understood that if the amount of the sample used for testing is too large, the amount of the sample that needs to be collected from the patient is relatively large; if the amount of sample used for testing is too small, it is not conducive to ensuring the accuracy of testing results. In this solution, the amount of a sample used for the single blast testing item is controlled to be about 50 µL, which is conducive to reducing the amount of sample and also conducive to ensuring the accuracy of the blast testing results.

As an embodiment, the controller 2120 is further configured to: control the amount of the sample dispensed by the sample dispensing device 2111 to the first reaction device 2113 to be 50 µL during sample dispensing of a single blast testing item. In this solution, the amount of sample for a single blast testing item is controlled to be 50 µL.

As an embodiment, the controller 2120 is further configured to: control the amount of the antibody reagent dispensed to the first reaction device 2113 to be 5 µL ± 2 µL during dispensing of the antibody reagent in a single blast testing item.

As an embodiment, the controller 2120 is further configured to: control the amount of the antibody reagent dispensed to the first reaction device 2113 to be less than or equal to 5 µL during dispensing of the antibody reagent in a single blast testing item. In this embodiment, with the optimized design of the preparation method of the sample to be tested for the blast testing and the optimized design of the analysis method of the blast testing results, it is possible to use a very small amount of the antibody reagent to carry out the accurate testing of blasts, which is conducive to reducing the cost of the reagent and the time of reaction.

As an embodiment, the controller 2120 is further configured to: control the amount of the antibody reagent dispensed to the first reaction device 2113 to be less than 5 µL during dispensing of the antibody reagent in a single blast testing item.

As an embodiment, the controller 2120 is further configured to: control the reaction time of the sample and the antibody reagent at the first reaction device 2113 to be less than or equal to 90s during detection of a single blast testing item. In this embodiment, with the optimized design of the preparation method of the samples to be tested for the blast testing and the optimized design of the analysis of the blast testing results, it is possible to reduce the reaction time of the samples and the antibody reagent on the premise of guaranteeing the accuracy of the testing results, which is conducive to improving the blast testing efficiency.

As an embodiment, the controller 2120 is further configured to: control the reaction time of the sample and the antibody reagent in the first reaction device 2113 to be less than or equal to 60s, during detection of a single blast testing item.

As an embodiment, the antibody reagent contains an antibody fluorescently labeled and capable of binding to an antigen of a surface of a blast, and the antibody is labeled with a fluorescent dye. The first optical signal includes a first side scatter signal generated when light emitted by the light emitting component irradiates the first sample to be tested and a first fluorescence signal generated by means of fluorescence labeling when the light emitted by the light emitting component irradiates the first sample to be tested. The first side scatter signal and the first fluorescence signal distinguish the blasts from the mature leukocytes. Specifically, in this solution, different fluorescence signals are obtained upon the difference in the binding degree of the fluorescently labeled antibody to different surface antigens of cells, and in combination with the side scatter signal reflecting the complexity of the internal structure of cells, the population of the blasts is distinguished directly from those of leukocytes, thus facilitating the accurate counting of the blasts.

As an embodiment, the antibody reagent is a CD45 reagent, and the CD45 reagent contains an antibody that is fluorescently labeled and capable of binding to an antigen of a surface of a blast. The antibody may specifically bind to the surface antigen of the blast, thus facilitating distinguishing the blast from the leukocyte by the fluorescence signal. Prior to the disclosure, no solution of a blast testing is found in which CD45 is used in an antibody-antigen reaction with a sample. The inventors of the disclosure have found that the use of CD45 for an antibody-antigen reaction followed by a hemolytic reaction of a sample, may greatly reduce the amount of the sample and the reagent used for the blast testing, and may shorten the reaction time of the sample.

In the above solution, the fluorescent dye and the antibody are bound together, i.e., the fluorescent reagent and the antibody are combined into one reagent, and a first reaction solution is prepared by reacting the sample with the single reagent. In specific applications, as an alternative solution, the fluorescent dye and the antibody may be separately provided in two different reagents, i.e., the reagent used for reacting with the sample to prepare the first reaction solution may also be two reagents, one of which contains an antibody, and the other contains a fluorescent dye. In this alternative solution, the antibody reagent contains an antibody not fluorescently labeled but capable of binding to an antigen of a surface of a blast, the first reaction device 2113 is configured to provide a reaction site for the sample with the antibody reagent and the first fluorescent reagent to prepare the first reaction solution, and the first optical signal includes a first side scatter signal generated when light emitted by the light emitting component irradiates the first sample to be tested and a first fluorescence signal generated via the first fluorescent reagent when the light emitted by the light emitting component irradiates the first sample to be tested.

As an embodiment, the first reaction device 2113 is configured to provide a reaction site for the first reaction solution with the first hemolytic reagent and the second fluorescent reagent to prepare the first sample to be tested; and the first optical signal further includes a second fluorescence signal generated via the second fluorescent reagent when the light emitted by the light emitting component irradiates the first sample to be tested. The controller 2120 obtains first particle information of the first sample to be tested through parsing the first optical signal fed back from the light receiving component: first blast information and first ghost region information through parsing the first side scatter signal and the first fluorescence signal, and second ghost region information through parsing the second fluorescence signal; and the second ghost region information is deducted from the first blast information and the first ghost region information to obtain blast information of the first sample to be tested. In this solution, by further adding a second fluorescent reagent in the hemolytic reaction, labeling of a ghost region is facilitated; and by deducting the effect of the ghost region on the blast testing, more accurate information about the blasts may be obtained. It should be noted that the controller 2120 obtains information of mature leukocytes distinguished from the blasts, in addition to the first blast information and the first ghost region information, based on the first side scatter signal and the first fluorescence signal.

As an embodiment, the sample dispensing device 2111 is further configured to aspirate the antibody reagent from a first reagent container and dispense the aspirated antibody reagent to the first reaction device 2113. In this solution, the sample dispensing device 2111 is time-shared for dispensing of the sample and the antibody reagent, which may realize the effect of not requiring manual dispensing of the antibody reagent without an additional dispensing device, and is conducive to further improving the degree of automation of the sample analyzer 2100, and eliminates the potential risk of errors in artificial quantification of the antibody reagent. In specific applications, the antibody reagent is not limited to being dispensed using the sample dispensing device 2111, for example, as an alternative solution, the sample analyzer 2100 further includes a first reagent dispensing device, the first reagent dispensing device is configured to aspirate the antibody reagent from a first reagent container and dispense the aspirated antibody reagent to the first reaction device 2113. In this alternative solution, the first reagent dispensing device different from the sample dispensing device 2111 is used for dispensing the antibody reagent.

As an embodiment, the second reaction device 2116 includes a third reaction cell, and includes at least one of a fourth reaction cell and a fifth reaction cell, the third reaction cell is configured to provide a reaction site for the sample with the first type of reagents to prepare the second sample to be tested, the fourth reaction cell is configured to provide a reaction site for the sample with the second type of reagents to prepare a third sample to be tested, and the fifth reaction cell is configured to provide a reaction site for the sample with a third type of reagents to prepare a fourth sample to be tested. The second sample to be tested is used for a four-part differential count of leukocytes, that is, the third reaction cell is a DIFF reaction channel and the second sample to be tested is used for testing of neutrophil information, eosinophil information, monocyte information and lymphocyte information of the sample. The third sample to be tested is used for basophil counting in leukocyte categorizations, that is, the fourth reaction cell is a WNB reaction channel and the third sample to be tested is used for testing of basophil information of the sample. By combining detection results of the second sample to be tested and the third sample to be tested, a five-part differential count of leukocytes is realized. The fourth sample to be tested is used for reticulocyte counting, that is, the fifth reaction cell is a RET reaction channel, and the fourth sample to be tested is used for testing of reticulocyte information of the sample.

As an embodiment, the second reaction device 2116 includes a third reaction cell, a fourth reaction cell, and a fifth reaction cell, and the sample analyzer 2100 may implement the leukocyte categorizing and counting and the reticulocyte counting in addition to the blast counting. In specific applications, the arrangement of the second reaction device 2116 is not limited thereto, for example, as an alternative solution, the second reaction device 2116 may also be configured to perform a leukocyte categorization and count only and the leukocyte categorization and count may be either a five-part differential count, a four-part differential count, or a three-part differential count. Alternatively, as another alternative solution, the second reaction device 116 may include only a reaction cell, which may be used for both the preparation of a sample to be tested for the leukocyte categorization and count and the preparation of a sample to be tested for the reticulocyte counting.

As an embodiment, the first sample transfer assembly 2114 is further configured to transfer the second sample to be tested or the third sample to be tested or the fourth sample to be tested from the second reaction device 2116 to the flow cell. When the second reaction device 2116 includes the third reaction cell, the fourth reaction cell, and the fifth reaction cell, the first sample transfer assembly 2114 is time-shared for transferring the first sample to be tested from the first reaction cell 21131 to the flow cell, transferring the second sample to be tested from the third reaction cell to the flow cell, transferring the third sample to be tested from the fourth reaction cell to the flow cell, and transferring the fourth sample to be tested from the fifth reaction cell to the flow cell. In this solution, the blast channel and the blood routine optical detection channel share one sample transfer assembly to transfer the sample to be tested to the flow cell, which has the advantages of a simple structure and low costs. In specific applications, as an alternative solution, different sample transfer assemblies may be used separately in the blast channel and the blood routine optical detection channel to transfer the sample to be tested to the flow cell.

As an embodiment, the flow cell also serves for passing the second sample to be tested or the third sample to be tested or the fourth sample to be tested through under thronging of a sheath liquid. When the second reaction device 2116 includes the third reaction cell, the fourth reaction cell, and the fifth reaction cell, the flow cell is time-shared for passing the first sample to be tested through under thronging of the sheath liquid, for passing the second sample to be tested through under the thronging of the sheath liquid, for passing the third sample to be tested through under the thronging of the sheath liquid, and for passing the fourth sample to be tested through under the thronging of the sheath liquid.

As an embodiment, the light emitting component is further configured to emit light towards the second sample to be tested or the third sample to be tested or the fourth sample to be tested in the flow cell. When the second reaction device 2116 includes the third reaction cell, the fourth reaction cell, and the fifth reaction cell, the light emitting component is time-shared for emitting light towards the first sample to be tested in the flow cell, emitting light towards the second sample to be tested in the flow cell, emitting light towards the third sample to be tested in the flow cell, and emitting light towards the fourth sample to be tested in the flow cell.

As an embodiment, the light receiving component is further configured to receive a second optical signal generated when the light emitted by the light emitting component passes through the second sample to be tested, or a third optical signal generated when the light passes through the third sample to be tested, or a fourth optical signal generated when the light passes through the fourth sample to be tested. When the second reaction device 2116 includes the third reaction cell, the fourth reaction cell, and the fifth reaction cell, the light receiving component is time-shared for receiving the first optical signal generated when the light emitted by the light emitting component passes through the first sample to be tested, the second optical signal generated when the light emitted by the light emitting component passes through the second sample to be tested, or the third optical signal generated when the light passes through the third sample to be tested, or the fourth optical signal generated when the light passes through the fourth sample to be tested.

As an embodiment, the first optical signal includes a first side scatter signal generated when light emitted by the light emitting component irradiates the first sample to be tested, a first fluorescence signal generated by means of fluorescence labeling or by the first fluorescent reagent when the light emitted by the light emitting component irradiates the first sample to be tested, and a second fluorescence signal generated by the second fluorescent reagent when the light emitted by the light emitting component irradiates the first sample to be tested.

As an embodiment, the first type of reagents includes a third fluorescent reagent and a second hemolytic reagent, and the second optical signal includes a second side scatter signal and a third fluorescence signal generated when the light emitted by the light emitting component irradiates the second sample to be tested.

As an embodiment, the second type of reagents includes a fourth fluorescent reagent and a third hemolytic reagent, and the third optical signal includes a third side scatter signal and a fourth fluorescence signal generated when the light emitted by the light emitting component irradiates the third sample to be tested.

As an embodiment, the third type of reagents includes a fifth fluorescent reagent, and the fourth optical signal includes a fourth side scatter signal and a fifth fluorescence signal generated when the light emitted by the light emitting component irradiates the fourth sample to be tested.

As an embodiment, the light receiving component includes a side scatter detector, a forward scatter detector, a first fluorescence detector and a second fluorescence detector. The side scatter detector is configured to receive the first side scatter signal, the second side scatter signal, the third side scatter signal and the fourth side scatter signal. The forward scatter detector is configured to receive the forward scatter signal generated when the light emitted by the light emitting component irradiates a sample to be tested. The first fluorescence detector is configured to receive the first fluorescence signal, and the second fluorescence detector is configured to receive the second fluorescence signal, the third fluorescence signal, the fourth fluorescence signal and the fifth fluorescence signal.

As an embodiment, the controller 2120 is further configured to perform at least one parsing action based on the information fed back from the light receiving component as follows: obtaining second particle information of the second sample to be tested through parsing the second optical signal fed back from the light receiving component, in which the second particle information includes neutrophil information, eosinophil information, monocyte information and lymphocyte information; obtaining third particle information of the third sample to be tested through parsing the third optical signal fed back from the light receiving component, in which the third particle information includes at least basophil information; and obtaining fourth particle information of the fourth sample to be tested through parsing the fourth optical signal fed back from the light receiving component, in which the fourth particle information includes reticulocyte information. When the second reaction device 2116 includes the third reaction cell, the fourth reaction cell, and the fifth reaction cell, the controller 2120 is time-shared for obtaining blast counting information, leukocyte categorizing and counting information, and reticulocyte counting information of the sample through parsing the information fed back from the light receiving component.

As an embodiment, the second reaction device 2116 includes at least a third reaction cell, and the controller 2120 is further configured to: deduct abnormal lymphocyte data of the second particle information from the blast information of the first particle information to obtain blast measurement data. Abnormal lymphocytes affect the recognition of particles in the blast sensitive area. Data of abnormal lymphocytes is measured via the DIFF detection channel, and the data of abnormal lymphocytes measured in the DIFF detection channel is deducted from the data measured in the blast channel so as to obtain more accurate data of blasts.

As an embodiment, the second reaction device 2116 includes at least a fourth reaction cell, and the controller 2120 is further configured to: deduct basophil data of the third particle information from the blast information of the first particle information to obtain blast measurement data. Basophils may affect the recognition of particles in the primary sensitive area. Basophil data is measured via the WNB detection channel, and the basophil data measured in the WNB detection channel is deducted from the data measured in the blast channel so as to obtain more accurate data of blasts.

As an embodiment, when testing items of the sample include a blast testing item and a routing blood testing item, the controller 2120 is configured to control the sample dispensing device 2111 to perform the following actions in sequence: aspirating a sample from a sample container 2200, aspirating an antibody reagent from a first reagent container, dispensing the aspirated antibody reagent and part of the sample to the first reaction device 2113, and dispensing part of the aspirated sample to the second reaction device 2116, in which the amount of the sample aspirated at one time by the sample dispensing device 2111 from the sample container 2200 is greater than or equal to the sum of the amount of the sample dispensed to the first reaction device 2113 and the amount of the sample dispensed to the second reaction device 2116. In this solution, when the sample in the sample container 2200 is to be used for both the blast testing item and the routing blood testing item, the sample dispensing device 2111 aspirates the sample in an amount for both the blast testing item and the routing blood testing item from the sample container 2200 at a time, then aspirates a fluorescently labeled antibody reagent, dispenses the antibody reagent and the sample for the blast testing item to a blast reaction channel, and then dispenses the sample for the routing blood testing item to a routine blood reaction channel. Since the reaction time of in the blast testing is longer than that in the routing blood testing, it is conducive to shortening the output time of testing results of one same sample by first dispensing the sample in the blast reaction channel and then dispensing the sample in the routing blood testing channel.

In specific applications, the order of dispensing samples of the sample analyzer 2100 is not limited to the above manner. For example, as a first alternative solution of the above dispensing method, when testing items of the sample include a blast testing item and a routing blood testing item, the controller 2120 is configured to control the sample dispensing device 2111 to perform the following actions in sequence: aspirating a sample from a sample container 2200, dispensing part of the aspirated sample to the second reaction device 2116, aspirating an antibody reagent from a first reagent container, and dispensing the aspirated antibody reagent and part of the sample to the first reaction device 2113, in which the amount of the sample aspirated at one time by the sample dispensing device 2111 from the sample container 2200 is greater than or equal to the sum of the amount of the sample dispensed to the first reaction device 2113 and the amount of the sample dispensed to the second reaction device 2116. In this alternative solution, a single sample aspiration is performed, the sample is dispensed for the routing blood testing item first, an antibody reagent is then aspirated, and the antibody reagent and the sample are then dispensed for the blast testing item.

Alternatively, as a second alternative solution of the above dispensing method, when testing items of the sample include a blast testing item and a routing blood testing item, the controller 2120 is configured to control the sample dispensing device 2111 to perform the following actions in sequence: aspirating a first sample from a sample container 2200, aspirating an antibody reagent from a first reagent container, dispensing the aspirated antibody reagent and at least part of the first sample to the first reaction device 2113, aspirating a second sample from the sample container 2200, and dispensing at least part of the aspirated second sample to the second reaction device 2116. In this alternative solution, sample aspiration is performed for the blast testing and the routing blood testing separately, in which the sample aspiration, the antibody reagent aspiration, the antibody reagent dispensing and the sample dispensing are performed for the blast testing item, followed by sample aspiration and sample dispensing for the routing blood testing item.

Alternatively, as a third alternative solution of the above dispensing method, when testing items of the sample include a blast testing item and a routing blood testing item, the controller 2120 is configured to control the sample dispensing device 2111 to perform the following actions in sequence: aspirating a first sample from a sample container 2200, dispensing at least part of the aspirated first sample to the second reaction device 2116, aspirating a second sample from the sample container 2200, aspirating an antibody reagent from a first reagent container, and dispensing the aspirated antibody reagent and at least part of the second sample to the first reaction device 2113. In this alternative solution, sample aspiration is performed for the blast testing and the routing blood testing separately, in which sample aspiration and sample dispensing are performed for the routing blood testing item, followed by sample aspiration, antibody reagent aspiration, antibody reagent dispensing and sample dispensing for the blast testing item.

Alternatively, as a fourth alternative solution of the above dispensing method, when testing items of the sample include a blast testing item and a routing blood testing item, the controller 2120 is configured to control the sample dispensing device 2111 to perform the following actions in sequence: aspirating a sample from a sample container 2200, dispensing part of the aspirated sample to the second reaction device 2116, dispensing part of the aspirated sample to the first reaction device 2113, aspirating an antibody reagent from a first reagent container, and dispensing the aspirated antibody reagent to the first reaction device 2113, in which the amount of the sample aspirated at one time by the sample dispensing device 2111 from the sample container 2200 is greater than or equal to the sum of the amount of the sample dispensed to the first reaction device 2113 and the amount of the sample dispensed to the second reaction device 2116. In this alternative solution, the sample and the antibody reagent are dispensed separately, in which a single sample aspiration is performed, the sample dispensing is performed for the routing blood testing item first, and then for the blast testing item, followed by antibody reagent aspiration and antibody reagent dispensing. After the sample aspiration at one time, sample dispensing may be performed first for the blast testing item, and then for the routing blood testing item, followed by antibody reagent aspiration and antibody reagent dispensing.

As an embodiment, when the sample aspirated at one time by the sample dispensing device 2111 from the sample container 2200 is dispensed at least to each of the first reaction device 2113 and the second reaction device 2116, the sample dispensing device 2111 aspirates a sample from the sample container 2200 at one time in an amount less than or equal to 200 µL. In this solution, the amount of the sample for blast and routing blood testing is less than or equal to 200 µL, thus greatly reducing the amount of the sample.

As an embodiment, the sample analyzer 2100 further includes a hemoglobin testing device 2117, the sample dispensing device 2111 is further configured to dispense at least part of the aspirated sample to the hemoglobin testing device 2117. The hemoglobin testing device 2117 is configured to measure hemoglobin parameters of a fifth sample to be tested that is at least prepared from the sample and a fourth type of reagents, and the controller 2120 is further configured to: obtain hemoglobin information in the fifth sample to be tested through parsing the information fed back from the hemoglobin testing device 2117. The hemoglobin testing belongs to part of the routing blood testing item, and of course, the hemoglobin testing is not necessarily required in the routing blood testing. The sample analyzer 2100 provided in this embodiment may also measure the hemoglobin testing item, which is conducive to expanding the scope of application of the sample analyzer 2100.

As an embodiment, the fourth type of reagents includes a diluent and a fourth hemolytic reagent, that is, the fifth sample to be tested is prepared from the diluent and the fourth hemolytic reagent. The diluent is used for diluting the sample. The fourth hemolytic reagent is and reagent, for example, capable of lysing erythrocytes in a blood sample, releasing hemoglobin from the erythrocytes, and converting the hemoglobin to methemoglobin. In specific applications, the diluent and the fourth hemolytic reagent may also be combined into one reagent.

As an embodiment, the sample analyzer 2100 further includes an impedance detection device 2118, the impedance detection device 2118 is configured to test a sixth sample to be tested that is at least prepared from the sample and a fifth type of reagents, and the controller 2120 is further configured to: obtain platelet information and/or erythrocyte information of the sixth sample to be tested through parsing the information fed back from the impedance detection device 2118. Platelet and erythrocyte tests are part of the routing blood testing items, and of course, it is not necessary to test platelets and/or erythrocytes in the routing blood testing. The sample analyzer 2100 provided in this solution may also measure the platelet and/or erythrocyte testing items, which is conducive to expanding the scope of application of the sample analyzer 2100.

As an embodiment, the fifth type of reagents is a diluent.

As an embodiment, the hemoglobin testing device 2117 includes a sixth reaction cell and a hemoglobin testing assembly, and the sixth reaction cell is configured to provide at least a reaction site for the sample and the fourth type of reagents to prepare a fifth sample to be tested. The sixth reaction cell is a reaction channel for hemoglobin, i.e., an HGB reaction channel. The hemoglobin testing assembly is configured to perform the hemoglobin testing on the fifth sample to be tested in the sixth reaction cell.

As an embodiment, the impedance detection device 2118 includes a detection chamber and an impedance detection assembly, the sample analyzer 2100 further includes a second sample transfer assembly, the sixth reaction cell is further configured to provide a reaction site for the sample and the diluent to prepare a sixth sample to be tested, and the second sample transfer assembly is connected between the sixth reaction cell and the testing chamber to transfer the sixth sample to be tested from the sixth reaction cell to the testing chamber under the control of the controller 2120. In this solution, the sixth reaction cell is first configured to prepare the sixth sample to be tested for impedance detection, and after part of the sixth sample to be tested is transferred to the testing chamber for impedance detection by the second sample transfer assembly, the remaining at least part of the sixth sample to be tested in the sixth reaction cell is used for preparation of the fifth sample to be tested, which is equivalent to the sixth reaction cell being reused to prepare the sample to be tested for impedance detection and the sample to be tested for the hemoglobin testing. In specific applications, it is also possible to provide a separate reaction cell for the impedance detection to prepare the sample to be tested for the impedance detection.

As an embodiment, the sample dispensing device 2111 includes a sample needle 21111, a sample aspiration and discharge driving component and a needle movement driving component. The sample needle 21111 is used for sample aspiration and discharge. The sample aspiration and discharge driving component is configured to provide a driving force for the sample aspiration and discharge. The needle movement driving component is configured to drive the sample needle 21111 to perform a two-dimensional or three-dimensional spatial movement so as to move the sample needle 21111 to different positions, such as to a standby position, a sample aspiration position, a sample addition position, an antibody reagent aspiration position, a cleaning position or the like.

As an embodiment, the sample aspiration and discharge driving component is a syringe.

As an embodiment, the sample analyzer 2100 tests a sample in a sample container 2200 and outputs at least two types of testing results as follows: blast testing results and routing blood testing results. If a patient needs to do both the blast testing item and the routing blood testing item, the blood samples collected from the patient may share one sample container 2200, that is, the two types of testing items may share one sample container 2200 for containing the sample, which facilitates reducing the consumption of the sample containers 2200, and also facilitates reducing the amount of samples to be collected. In specific applications, as an alternative solution, a sample for the blast testing item and a sample for the routing blood testing item may be separately contained in two different sample containers 2200.

As an embodiment, the sample analyzer 2100 tests the sample aspirated at one time by the sample dispensing device 2111 from the sample container 2200, and outputs at least two types of testing results as follows: blast testing results and routing blood testing results. In this solution, after the sample aspiration at one time, at least two types of testing results are output, which is conducive to reducing the number of aspiration actions of the sample dispensing device 2111, and accordingly is conducive to improving testing efficiency of the sample analyzer 2100. In specific applications, as an alternative solution, the sample aspiration may be performed separately for two or more types of testing items, that is, the number of aspirations of the sample in one sample container 2200 may also be two or more.

As an embodiment, the sample analyzer 2100 further includes a recognition device 2119, which is configured to recognize the sample container 2200. The controller 2120 is further configured to obtain at least information on testing items to be tested of the sample in the sample container 2200 based on the information fed back from the recognition device 2119.

As an embodiment, the controller 2120 is further configured to control the sample analyzer 2100 to perform the blast testing and/or the routing blood testing on the sample in the sample container 2200 based on the information of the testing items to be tested. In this solution, the sample analyzer 2100, based on the information fed back from the recognition device 2119, automatically obtains the testing item information of the sample and automatically controls an analyzer execution body 2110 to execute the corresponding testing items, with a high degree of automation.

As an embodiment, the sample analyzer 2100 further includes a human-computer interaction device 2140. The human-computer interaction device 2140 has a blast testing mode and a routing blood testing mode, and the controller 2120 is further configured to control the sample analyzer 2100 to perform a blast testing and/or a routing blood testing on the sample in the sample container 2200 based on the testing mode selected by an operator at the human-computer interaction device 2140. In this solution, the operator may manually start the testing mode of the sample via the human-computer interaction device 2140.

As an embodiment, the human-computer interaction device 2140 includes at least one of a display screen, a keyboard and a mouse.

As an embodiment, the recognition device 2119 is configured to recognize an identification code of the sample container 2200, the identification code including at least one of a two-dimensional (2D) code, a barcode, and a radio frequency (RFID). The controller 2120 obtains information on the testing items of the sample in the sample container 2200 based on the identification code recognized by the recognition device 2119.

In specific applications, as an alternative solution, the recognition device 2119 may be configured to recognize appearance characteristics of the sample container 2200 in addition to the identification code of the sample container 2200. The appearance characteristics of the sample container 2200 include at least one of a container body shape, a container body size, an amount of sample, the presence or absence of a cap body, a color of the cap body, a shape of the cap body, and a size of the cap body of the sample container 2200. The controller 2120 obtains at least one of the following information in addition to the testing item information of the sample based on the information fed back from the recognition device 2119: an amount of sample in the sample container 200, a type of the sample container 200 and sample number information.

As an embodiment, the recognition device 2119 includes at least one of a vision camera, a barcode scanner, a two-dimensional code scanner, and a radio frequency code reader.

The above only exemplarily illustrates the structure and components of the cell analyzer of the disclosure. Various modifications, variations, or substitutions that can be obtained by a person skilled in the art accordingly are included in the scope of the disclosure. The method of the disclosure is illustrated by the further embodiments below.

### Example 1

Reagent A: DIFF fluorescent dye (M-68P FD staining solution), 20 µL
Reagent B: DIFF channel hemolytic agent (M-68P LD hemolytic agent), 1 mL
Reagent C: CD45-FITC (Biolegend, 200 µg/mL, pH = 7.2, phosphate buffer, 0.2% bovine serum albumin, 0.09% sodium azide), 1 µL

The blood analyzer (Mindray BC-6800Plus, excitation wavelength: 450 nm) aspirated 20 microliters of a blood sample to be tested (taken from the terminal blood of a subject, containing immature granulocytes (IG)) through a sampling needle and delivered the blood sample into a mixing chamber. Reagents A to C were added to the mixing chamber according to the above amounts, mixed with the blood sample, and then incubated at 42°C for 60 seconds to prepare a sample to be tested for detection. The forward scatter signals, side scatter signals and fluorescence signals generated by particles in the sample to be tested were collected.

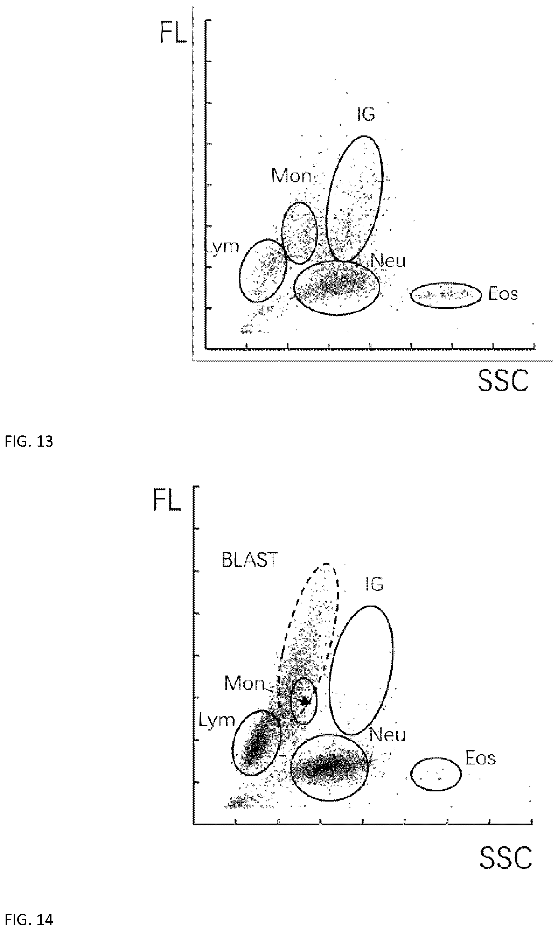

It was measured by a DIFF channel of an apparatus that the leukocyte content of the sample was 3.4 × 10⁹/L. In a CD45FL/SSC dimension, by counting the number of scatter points in the BLAST area, BLAST% was obtained to be 0%, indicating no correction for FL/SSC was required. According to the FL/SSC scatter diagram (FIG. 13), four-part differential results of leukocytes were obtained as Neu%, Lym%, Mon%, Eos% and IG%, which were 64.2%, 7.1%, 9.2%, 4.4% and 21.1%, respectively. Through calculation, the above proportions can be further converted into contents of each particle in the sample.

In addition, the same blood sample was taken and subjected to classic artificial microscopy counting to obtain Neu%, Lym%, Mon%, Eos% and IG%, which were 62.3%, 6.61%, 7.4%, 4% and 18.1%, respectively.

It can be seen from the above results that demarcation of leukocytes in the above method has a good correlation with the proportion in artificial microscopy.

### Example 2

Reagent A: DIFF fluorescent dye (M-68P FD staining solution), 20 µL
Reagent B: DIFF channel hemolytic agent (M-68P LD hemolytic agent), 1 mL
Reagent C: CD45-FITC (Biolegend, 200 µg/mL, pH = 7.2, phosphate buffer, 0.2% bovine serum albumin, 0.09% sodium azide), 1 µL

A blood sample to be tested (taken from the terminal blood of a subject, containing blasts) was processed and tested in the same manner and using the same apparatus as in Example 1.

It was measured by the DIFF channel of the apparatus that the content of leukocytes (including blasts) of the sample was 12.6 × 10⁹/L. In a CD45FL/SSC dimension, by counting the number of scatter points in the BLAST area, BLAST% was obtained to be 12%, and then the BLAST content in the sample was calculated to be 1.5 × 10⁹/L. The distribution of particles that are recognized as BLAST according to a CD45FL/SSC dimension was determined in an FL/SSC dimension (the dotted box in FIG. 14). After deducting BLAST particles in the above area in the FL/SSC dimension, the number of particles in the corrected Lym and Mon areas was obtained, and the corrected respective count results can be obtained, in which Neu%, Lym%, Mon% and Eos% were 52.9%, 33.7%, 1.1% and 0.2%, respectively.

In addition, the same blood sample was taken and subjected to classic artificial microscopy counting to obtain BLAST%, Neu%, Lym%, Mon%, Eos% and IG%, which were 10.4%, 53.2%, 31.4%, 1.2% and 0.2%, respectively. It can be seen from the results that demarcation of blasts and leukocytes in the above method has a good correlation with the proportion in artificial microscopy.

### Example 3

Reagent A: DIFF fluorescent dye (Mindray, M-68P FD staining solution), 20 µL
Reagent B: DIFF channel hemolytic agent (Mindray, M-68P LD hemolytic agent), 1 mL
Reagent C: CD45-FITC (Biolegend, 200 µg/mL, ph = 7.2, phosphate buffer, 0.2% bovine serum albumin, 0.09% sodium azide), 1 µL
Reagent D: CD45 channel hemolytic agent (Mindray, diethylene glycol, formaldehyde, buffer), 1 mL
Reagent E: WNB fluorescent dye (M-68P FN staining solution), 20 µL
Reagent F: WNB channel hemolytic agent (M-68P LN hemolytic agent), 1 mL

The blood analyzer (Mindray BC-6800Plus, excitation wavelength: 450 nm) aspirated 60 microliters of a blood sample to be tested (the same blood sample as in Example 2) through a sampling needle, divided the blood sample into three sub-samples to be tested and delivered the three sub-samples into different mixing chambers. Reagents A and B were added to a DIFF channel of the mixing chamber according to the above amounts, mixed with the blood sample, and incubated at 42°C for 30 seconds to prepare a second sample to be tested. Reagents E and F were added to a WNB channel of the mixing chamber according to the above amounts, mixed with the blood sample, and incubated at 42°C for 30 seconds to prepare a third sample to be tested. Reagents C and D were added to a CD45 channel of the mixing chamber according to the above amounts, mixed with the blood sample, and incubated at 42°C for 45 seconds to prepare a first sample to be tested. The three samples to be tested were sequentially tested, and the forward scatter signals, side scatter signals and fluorescence signals generated by particles in the samples to be tested of each channel were separately collected.

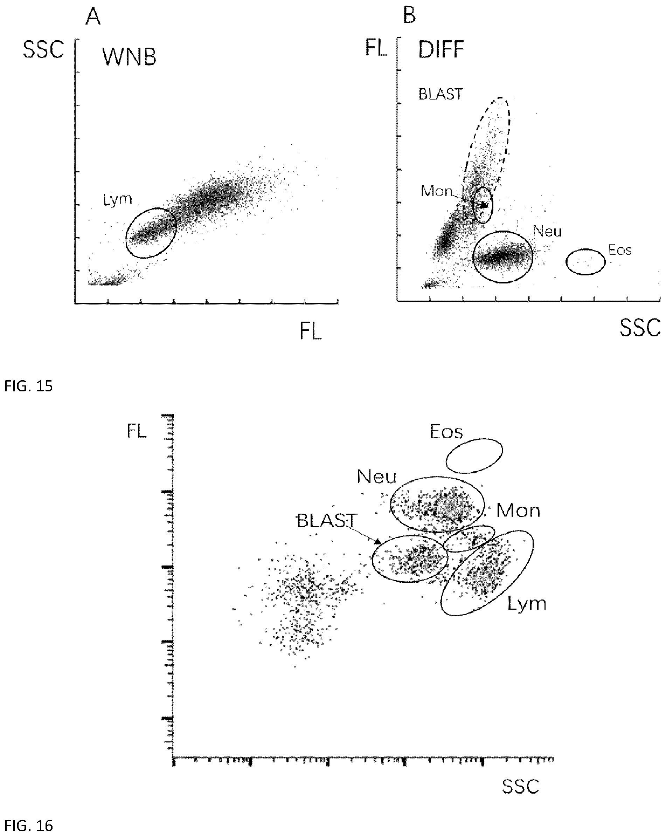

It was measured by the DIFF channel of the apparatus that the leukocyte content of the sample was 12.6 × 10⁹/L. The Lym% obtained in the FL/SSC dimensions of the WNB channel was 33.7% (see FIG. 15A). In a CD45FL/SSC dimensions, by counting the number of scatter points in the BLAST area, BLAST% was obtained to be 12%, and then the blast content in the sample was calculated to be 1.5 × 10⁹/L. BLAST% (12%) was obtained according to the CD45FL/SSC dimensions, and Lym% (33.7%) was obtained by the FL/SSC dimensions of the WNB channel. In conjunction with the above two results, proportional deduction was performed in the DIFF channel to obtain the corrected Neu%, Mon% and Eos%, which were 52.9%, 1.1% and 0.2%, respectively.

It can be seen from the results of BLAST%, Neu%, Lym%, Mon%, Eos% and IG% obtained by classic artificial microscopy counting being 10.4%, 53.2%, 31.4%, 1.2% and 0.2% respectively in Example 2 that demarcation of leukocytes in the above method has a good correlation with the proportion in artificial microscopy.

### Example 4

Reagent C: CD45-FITC (Biolegend, 200 µg/mL, ph = 7.2, phosphate buffer, 0.2% bovine serum albumin, 0.09% sodium azide), 1 µL
Reagent D: CD45 channel hemolytic agent (Mindray, diethylene glycol, formaldehyde, buffer), 1 mL

The blood analyzer (Mindray BC-6800Plus, excitation wavelength: 450 nm) aspirated 20 microliters of a blood sample to be tested (taken from the terminal blood of a patient) through a sampling needle and delivered the blood sample into a mixing chamber. Reagents C and D were added to the mixing chamber according to the above amounts, mixed with the blood sample, and then incubated at 42°C for 60 seconds to prepare a sample to be tested for detection. The forward scatter signals, side scatter signals and fluorescence signals generated by particles in the above sample were collected.

It was measured by the apparatus that the leukocyte content of the sample was 11.9 × 10⁹/L. The number of scatter points in the BLAST, Neu, Lym, Mon and Eos areas was separately counted in a CD45FL/SSC dimension (see FIG. 16) to obtain BLAST%, Neu%, Lym%, Mon% and Eos%, which were 11.9%, 52.9%, 33.7%, 1.1% and 0.2%, respectively.

In addition, the same blood sample was taken and subjected to classic artificial microscopy counting to obtain BLAST%, Neu%, Lym%, Mon%, Eos% and IG%, which were 10.4%, 53.2%, 31.4%, 1.2% and 0.2%, respectively. It can be seen from the above results that demarcation of blasts and leukocytes in the above method has a good correlation with the proportion in artificial microscopy.

The foregoing description merely relates to the preferred embodiments of the disclosure, and is not intended to limit the scope of patent of the disclosure. All equivalent variations made by using the content of the specification and the accompanying drawings of the disclosure from the concept of the disclosure, or the direct/indirect applications of the contents in other related technical fields all fall within the scope of patent protection of the disclosure.

## Claims

1. A blood analyzer, comprising a sample aspiration device, a reagent supply device, a mixing chamber, a light source, an optical flow cell, an optical detector, a processor, and a non-transitory computer-readable storage medium programmed with a computer application program, wherein
the sample aspiration device is configured to aspirate a sample and transfer at least part of the aspirated sample as a first sub-sample to the mixing chamber;
the reagent supply device is configured to provide a reagent and transfer the reagent to the mixing chamber, the reagent comprising a first type of reagents;
the mixing chamber is configured to mix the first sub-sample with the first type of reagents to form a first sample to be tested, wherein the first type of reagents comprises a first reagent comprising a first hemolytic agent and a second reagent comprising a fluorescently labeled antibody, and the antibody being capable of binding to an antigen on a surface of a blast;
the light source is configured to align a light beam to a detection hole of the optical flow cell that is communicated with the mixing chamber;
the optical detector is configured to detect a scatter signal and a fluorescence signal of the first sample to be tested that passes through the detection hole, the scatter signal comprising a first side scatter intensity signal from the first sample to be tested, and the fluorescence signal comprising an antibody fluorescence intensity signal from the fluorescently labeled antibody; and
the processor is operably connected to the optical detector, and when the computer application program in the non-transitory computer readable storage medium is executed by the processor, the processor controls a time for mixing the first hemolytic agent with the first sub-sample in the mixing chamber to be no more than 2 minutes, and the processor obtains particle information of the first sub-sample based on the first side scatter intensity signal and the antibody fluorescence intensity signal, the particle information of the first sub-sample comprising blast information.

2. The blood analyzer of claim 1, wherein
the first type of reagents further comprises a third reagent comprising a first fluorescent dye; the scatter signal further comprises a first fluorescence signal from the first fluorescent dye; and
when the computer application program is executed by the processor, the processor further obtains particle information of the first sub-sample based on the first side scatter intensity signal and the first fluorescence intensity signal, the particle information of the first sub-sample comprising neutrophil information, monocyte information, lymphocyte information and eosinophil information.

3. The blood analyzer of claim 2, wherein when the computer application program is executed by the processor, when the blast information indicates that the sample contains no blasts, the processor further obtains respective count of neutrophils, eosinophils, monocytes and lymphocytes, and optionally obtains immature granulocyte information and/or atypical lymphocyte information, based on the particle information of the first sub-sample; or
when the blast information indicates that the sample contains blasts, the processor deducts an effect of the blasts from the particle information of the first sub-sample so as to obtain respective count of neutrophils, eosinophils, monocytes, and lymphocytes, and optionally obtain immature granulocyte information and/or atypical lymphocyte information, based on the blast information.

4. The blood analyzer of claim 1, wherein
the sample aspiration device is further configured to sequentially transfer at least part of the aspirated sample as a second sub-sample and a third sub-sample to the mixing chamber;
the reagent further comprises a second type of reagents comprising a third reagent, a fourth reagent, a fifth reagent and a sixth reagent;
the mixing chamber is further configured to mix the second sub-sample with the third reagent and the fourth reagent to obtain a second sample to be tested, and mix the third sub-sample with the fifth reagent and the sixth reagent to obtain a third sample to be tested, respectively, wherein the third reagent comprises a first fluorescent dye, the fourth reagent comprises a second hemolytic agent, the fifth reagent comprises a second fluorescent dye, the sixth reagent comprises a third hemolytic agent, the second hemolytic agent is same as or different from the first hemolytic agent, the third hemolytic agent is different from either of the first and second hemolytic agents, and the second fluorescent dye is different from the first fluorescent dye; the optical detector is further configured to detect respective scatter signal and respective fluorescence signal of the second and third samples to be tested that respectively pass through the detection hole; the respective scatter signal comprises a second side scatter intensity signal from the second sample to be tested and a third side scatter intensity signal from the third sample to be tested; the respective fluorescence signal comprises a second fluorescence intensity signal from the first fluorescent dye of the second sample to be tested and a third fluorescence intensity signal from the second fluorescent dye of the third sample to be tested; when the computer application program is executed by the processor, the processor further obtains particle information of the second sub-sample based on the second side scatter intensity signal and the second fluorescence intensity signal of the second sample to be tested, and particle information of the third sub-sample based on the third side scatter intensity signal and the third fluorescence intensity signal of the third sample to be tested, wherein the particle information of the second sub-sample comprises neutrophil information, monocyte information, lymphocyte information, and eosinophil information, and the particle information of the third sub-sample comprises lymphocyte information, basophil information, and nucleated erythrocyte information;
wherein when the computer application program is executed by the processor, when the blast information indicates that the sample contains no blasts, the processor further obtains respective count of neutrophils, eosinophils, monocytes, and lymphocytes, and optionally obtains immature granulocyte information and atypical lymphocyte information, based on the particle information of the second sub-sample; or
when the blast information indicates that the sample contains blasts, the processor eliminates an effect of the blast information on the particle information of the second sub-sample by combining the blast information with the lymphocyte information from the particle information of the third sub-sample so as to obtain respective count of neutrophils, eosinophils, monocytes, and lymphocytes, and optionally obtain immature granulocyte information and atypical lymphocyte information, based on the particle information of the second sub-sample.

5. The blood analyzer of any one of claims 1 to 4, wherein when the computer application program is executed by the processor, the processor counts the blasts.

6. The blood analyzer of any one of claims 1 to 4, wherein when the computer application program is executed by the processor, when the blast information indicates that the sample contains blasts, the processor further alarms presence of the blasts in the sample, or alarms presence of the blasts in the sample and outputs a count of the blasts.

7. The blood analyzer of any one of claims 1 to 4, wherein the scatter signal further comprises a first forward scatter signal from the first sample to be tested, and when the computer application program is executed by the processor, the processor further determines that the blasts are lymph blasts and/or myeloid blasts, based on the first forward scatter intensity signal and the antibody fluorescence intensity signal.

8. The blood analyzer of any one of claims 1 to 4, wherein the scatter signal further comprises a first forward scatter signal from the first sample to be tested, and when the computer application program is executed by the processor, the processor further alarms presence of lymph blasts and/or myeloid blasts in the sample based on the first forward scatter intensity signal and the antibody fluorescence intensity signal.

9. The blood analyzer of any one of claims 1 to 4, wherein when the computer application program is executed by the processor, the processor further obtains leukocyte information of the sample based on the first side scatter intensity signal and the antibody fluorescence intensity signal, the leukocyte information comprising information of lymphocytes, monocytes, neutrophils and eosinophils.

10. The blood analyzer of any one of claims 1 to 4, wherein a reaction time of the first hemolytic agent and the sample is 30 to 80 seconds, preferably 50 to 60 seconds.

11. The blood analyzer of any one of claims 1 to 4, wherein the first hemolytic agent is capable of fragmenting erythrocytes while maintaining leukocytes intact in terms of cellular morphology.

12. The blood analyzer of claim 11, wherein the first hemolytic agent comprises at least one selected from quaternary ammonium-based cationic surfactants, polyoxyethylene alkyl ether based nonionic surfactants, fatty alcohol polyoxyethylene ether surfactants, alkyl glycosides, triterpene saponins, steroidal saponins, and diethylene glycol, and preferably the first hemolytic agent comprises diethylene glycol and formaldehyde dissolved in a buffer.

13. The blood analyzer of any one of claims 1 to 4, wherein the antibody is CD45.

14. The blood analyzer of any one of claims 1 to 4, wherein the blood analyzer further comprises a hemoglobin testing unit and/or an impedance counting detection unit.

15. A sample analysis method, comprising:
receiving an operation instruction to perform a blast testing on a sample;
wherein the blast testing comprises:
aspirating the sample, comprising aspirating at least part of the sample as a first sub-sample;
processing the sample, comprising mixing the first sub-sample with a first type of reagents to obtain a first sample to be tested; wherein the first type of reagents comprises a first reagent comprising a first hemolytic agent and a second reagent, the first reagent comprising a fluorescently labeled antibody, the first hemolytic agent being mixed with the first sub-sample for no more than 2 minutes, and the antibody being capable of binding to an antigen of a surface of a blast;
detecting the sample to be tested, comprising passing particles in the first sample to be tested through a detection region of an optical detection device one by one and irradiating the particles in the first sample to be tested using a light source of the optical detection device, to obtain a scatter signal and a fluorescence signal of the first sample to be tested, the scatter signal comprising a first side scatter intensity signal from the first sample to be tested, and the fluorescence signal comprising an antibody fluorescence intensity signal from the fluorescently labeled antibody; and
obtaining particle information, comprising obtaining particle information of the first sub-sample based on the first side scatter intensity signal and the antibody fluorescence intensity signal, the particle information of the first sub-sample comprising blast information.

16. The sample analysis method of claim 15, wherein the first type of reagents further comprises a third reagent, the third reagent comprising a first fluorescent dye, and the scatter signal further comprises a first fluorescence signal from the first fluorescent dye in the first sample to be tested; and
the blast testing further comprises: obtaining particle information of the first sub-sample based on the first side scatter intensity signal and the first fluorescence intensity signal, the particle information of the first sub-sample comprising neutrophil information, monocyte information, lymphocyte information and eosinophil information.

17. The sample analysis method of claim 16, wherein the blast testing further comprises:
when the blast information indicates that the sample contains no blasts, obtaining respective count of neutrophils, eosinophils, monocytes, and lymphocytes, and optionally obtaining immature granulocyte information and/or atypical lymphocyte information, based on the particle information of the first sub-sample; or
when the blast information indicates that the sample contains blasts, deducting an effect of the blasts from the particle information of the first sub-sample so as to obtain respective count of neutrophils, eosinophils, monocytes, and lymphocytes, and optionally obtain immature granulocyte information and/or atypical lymphocyte information.

18. The sample analysis method of claim 15, wherein,
aspirating the sample further comprises aspirating at least parts of the sample as a second sub-sample and a third sub-sample;
processing the sample further comprises processing the second and third sub-samples with a second type of reagents, respectively, wherein the second type of reagents comprises a third reagent, a fourth reagent, a fifth reagent and a sixth reagent, mixing the second sub-sample with the third reagent and the fourth reagent to obtain a second sample to be tested, and mixing the third sub-sample with the fifth reagent and the sixth reagent to obtain a third sample to be tested, wherein the third reagent comprises a first fluorescent dye, the fourth reagent comprises a second hemolytic agent, the fifth reagent comprises a second fluorescent dye, the sixth reagent comprises a third hemolytic agent, the second hemolytic agent is same as or different from the first hemolytic agent, the third hemolytic agent is different from either of the first and second hemolytic agents, and the second fluorescent dye is different from the first fluorescent dye;
detecting the sample to be tested further comprises respectively passing particles in the second and third samples to be tested through the detection region of the optical detection device one by one, and respectively irradiating the particles in the second and third samples to be tested using the light source of the optical detection device, to obtain respective scatter signal and respective fluorescence signals of the second and third samples to be tested; wherein the respective scatter signal comprises a second side scatter intensity signal from the second sample to be tested and a third side scatter intensity signal from the third sample to be tested, the respective fluorescence signal comprises a second fluorescence intensity signal from the first fluorescent dye of the second sample to be tested and a third fluorescence intensity signal from the second fluorescent dye of the third sample to be tested;
obtaining particle information further comprises obtaining particle information of the second sub-sample based on the second side scatter intensity signal and the second fluorescence intensity signal of the second sample to be tested, and obtaining particle information of the third sub-sample based on the third side scatter intensity signal and the third fluorescence intensity signal of the third sample to be tested, wherein the particle information of the second sub-sample comprises neutrophil information, monocyte information, lymphocyte information, and eosinophil information, and the particle information of the third sub-sample comprises lymphocyte information, basophil information, and nucleated erythrocyte information; and the blast testing further comprises:
when the blast information indicates that the sample contains no blasts, obtaining respective count of neutrophils, eosinophils, monocytes, and lymphocytes, and optionally obtaining immature granulocyte information and atypical lymphocyte information, based on the particle information of the second sub-sample; or
when the blast information indicates that the sample contains blasts, eliminating an effect of the blast information on the particle information of the second sub-sample by combining the blast information with lymphocyte information from the particle information of the third sub-sample so as to obtain respective count of neutrophils, eosinophils, monocytes, and
lymphocytes, and optionally obtain immature granulocyte information and atypical lymphocyte information, based on the particle information of the second sub-sample.

19. The sample analysis method of any one of claims 15 to 18, wherein the method further comprises performing a routine testing on the sample,
wherein the routine testing comprises:
aspirating at least part of the sample as a first initial sub-sample;
processing the first initial sub-sample, comprising mixing the first initial sub-sample with a third reagent and a fourth reagent to obtain a first initial sample to be tested, wherein the third reagent comprises a first fluorescent dye, the fourth reagent comprises a second hemolytic agent, and the second hemolytic agent is same as or different from the first hemolytic agent;
passing particles in the first initial sample to be tested through the detection region of the optical detection device one by one, and irradiating the particles in the first initial sample to be tested using the light source of the optical detection device to obtain a scatter signal and a fluorescence signal of the particles in the first initial sample to be tested, the scatter signal comprising a first initial side scatter intensity signal from the first initial sample to be tested, and the fluorescence signal comprising a first initial fluorescence signal from the first fluorescent dye in the first initial sample to be tested;
obtaining particle information of the first initial sample to be tested based on the first initial side scatter intensity signal and the first initial fluorescence intensity signal, the particle information comprising at least leukocyte information; and
when the leukocyte information is abnormal, issuing a blast alarm and optionally issuing an operation instruction.

20. The sample analysis method of claim 15, wherein the method further comprises performing a routine testing on the sample;
wherein the routine testing comprises:
aspirating at least part of the sample as a first initial sub-sample and a second initial sub-sample, respectively;
processing the first and second initial sub-samples respectively, comprising mixing the first initial sub-sample with a third reagent and a fourth reagent to obtain a first initial sample to be tested, and mixing the second initial sub-sample with a fifth reagent and a sixth reagent to obtain a second initial sample to be tested, the third reagent comprising a first fluorescent dye, the fourth reagent comprising a second hemolytic agent, the fifth reagent comprising a second fluorescent dye, the sixth reagent comprising a third hemolytic agent, the second hemolytic agent being same as or different from the first hemolytic agent, the third hemolytic agent being different from either of the first and second hemolytic agents, and the second fluorescent dye being different from the first fluorescent dye;
respectively passing particles in the first and second initial samples to be tested through the detection region of the optical detection device one by one, and respectively irradiating the particles in the first and second initial samples to be tested by the light source of the optical detection device, to obtain respective scatter signal and respective fluorescence signal of the particles in the first and second initial samples to be tested, the respective scatter signal comprising a first initial side scatter intensity signal from the first initial sample to be tested and a second initial side scatter intensity signal from the second initial sample to be tested, and the respective fluorescence signals comprising a first initial fluorescence signal from the first fluorescent dye in the first initial sample to be tested and a second initial fluorescence signal from the second fluorescent dye in the second initial sample to be tested; and
obtaining particle information of the first initial sample to be tested based on the first initial side scatter intensity signal and the first initial fluorescence intensity signal, said particle information comprising at least initial leukocyte information, and obtaining particle information of the second initial sample to be tested based on the second initial side scatter intensity signal and the second initial fluorescence intensity signal, said particle information comprising at least initial lymphocyte information; and
when the initial leukocyte information is abnormal, issuing a blast alarm and optionally issuing an operation instruction.

21. The sample analysis method of claim 20, wherein the blast testing further comprises:
eliminating an effect of the blasts on the initial leukocyte information by combining the blast information with the initial lymphocyte information so as to obtain respective count of neutrophils, eosinophils, monocytes, and lymphocytes, and optionally obtain immature granulocyte information and/or atypical lymphocyte information.

22. The sample analysis method of any one of claims 19 to 21, wherein the routine testing is carried out before the blast testing, and issuing of the operation instruction is enabled based on results of the routine testing.

23. The sample analysis method of claim 22, wherein the operation instruction comprises a user-entered instruction or an instruction automatically triggered when the blast alarm is issued.

24. The sample analysis method of any one of claims 15 to 18, wherein the method further comprises: counting the blasts.

25. The sample analysis method of any one of claims 15 to 18, wherein the method further comprises: when the blast information indicates that the sample contains blasts, alarming presence of the blasts in the sample, or alarming presence of the blasts in the sample and outputting a count of the blasts.

26. The sample analysis method of any one of claims 15 to 18, wherein the scatter signal further comprises a first forward scatter signal from the first sample to be tested, and the method further comprises:
determining that the blasts are lymph blasts and/or myeloid blasts based on the first forward scatter intensity signal and the antibody fluorescence intensity signal.

27. The sample analysis method of any one of claims 15 to 18, wherein the scatter signal further comprises a first forward scatter signal from the first sample to be tested, and the method further comprises:
alarming presence of lymph blasts and/or myeloid blasts in the sample based on the first forward scatter intensity signal and the antibody fluorescence intensity signal.

28. The sample analysis method of any one of claims 15 to 18, wherein the method further comprises: obtaining leukocyte information of the sample based on the first side scatter intensity signal and the antibody fluorescence intensity signal, the leukocyte information comprising information of lymphocytes, monocytes, neutrophils and eosinophils.

29. The sample analysis method of any one of claims 15 to 19, wherein a reaction time of the first hemolytic agent and the sample is 30 to 80 seconds, preferably 50 to 60 seconds.

30. The sample analysis method of any one of claims 15 to 19, wherein the first hemolytic agent is capable of fragmenting erythrocytes while maintaining leukocytes intact in terms of cellular morphology.

31. The sample analysis method of any one of claims 15 to 19, wherein the first hemolytic agent is at least one selected from quaternary ammonium-based cationic surfactants, polyoxyethylene alkyl ether nonionic surfactants, fatty alcohol polyoxyethylene ether surfactants, alkyl glycosides, triterpene saponins, steroidal saponins, and diethylene glycol, and preferably the first hemolytic agent comprises diethylene glycol and formaldehyde dissolved in a buffer.

32. The sample analysis method of any one of claims 15 to 19, wherein the antibody is CD45.

33. A sample analyzer, comprising a sample dispensing device, an optical detection device, a first reaction device, a second reaction device, a first sample transfer assembly and a controller; wherein the sample dispensing device is configured to aspirate a sample from a sample container and dispense at least part of the aspirated sample to the first reaction device and/or the second reaction device;
the first reaction device is configured to at least provide a reaction site for the sample, an antibody reagent and a first hemolytic reagent to prepare a first sample to be tested, wherein an antibody in the antibody reagent is capable of binding to an antigen on a surface of a blast in the sample;
the second reaction device is configured to at least provide a reaction site for the sample and a first type of reagents to prepare a second sample to be tested;
the first sample transfer assembly is configured to transfer the first sample to be tested from the first reaction device to the optical detection assembly, and transfer the second sample to be tested from the second reaction device to the optical detection assembly;
the optical detection assembly comprises a flow cell, a light emitting component and a light receiving component, wherein the flow cell is configured to pass the first sample to be tested or the second sample to be tested through under thronging of a sheath liquid, the light emitting component is configured to emit light towards the first sample to be tested or the second sample to be tested in the flow cell, the light receiving component is configured to receive a first optical signal generated when light emitted by the light emitting component passes through the first sample to be tested and receive a second optical signal generated when the light emitted by the light emitting component passes through the second sample to be tested; and
the controller is configured to:
obtain first particle information of the first sample to be tested through parsing the first optical signal fed back from the light receiving component, the first particle information comprising blast information; and
obtain second particle information of the second sample to be tested through parsing the second optical signal fed back from the light receiving component, the second particle information comprising neutrophil information, eosinophil information, monocyte information and lymphocyte information.

34. The sample analyzer of claim 33, wherein the sample analyzer further comprises a housing, the optical detection device, the first reaction device and the second reaction device all being located within the housing.

35. The sample analyzer of claim 33, wherein the controller is further configured to: control an amount of sample dispensed to the first reaction device by the sample dispensing device to be less than or equal to 60 µL during a sample dispensing process of a single blast testing item; and/or
the controller is further configured to: control an amount of sample dispensed by the sample dispensing device to the first reaction device to be 50 µL ± 10 µL during a sample dispensing process of a single blast testing item.

36. The sample analyzer of claim 33, wherein the controller is further configured to: control the reaction time of the sample and the antibody reagent in the first reaction device to be less than or equal to 90s, preferably less than or equal to 60s, during a detecting process of a single blast testing item.

37. The sample analyzer of claim 33, wherein the antibody reagent is a CD45 reagent.

38. The sample analyzer of claim 33, wherein the sample dispensing device is further configured to aspirate the antibody reagent from a first reagent container and dispense the aspirated antibody reagent to the first reaction device; or
the sample analyzer further comprises a first reagent dispensing device, the first reagent dispensing device being configured to aspirate the antibody reagent from a first reagent container and dispense the aspirated antibody reagent to the first reaction device.

39. The sample analyzer of claim 33, wherein the antibody reagent comprises an antibody that is fluorescently labeled and capable of binding to an antigen on a surface of a blast, the first optical signal comprises a first side scatter signal generated when light emitted by the light emitting component irradiates the first sample to be tested and a first fluorescence signal generated by means of fluorescence labeling when the light emitted by the light emitting component irradiates the first sample to be tested; or
the antibody reagent comprises an antibody that is not fluorescently labeled but capable of binding to an antigen on a surface of a blast, the second reaction cell is configured to provide a reaction site for the sample, the antibody reagent and a first fluorescent reagent to prepare the first reaction solution, and the first optical signal comprises a first side scatter signal generated when light emitted by the light emitting component irradiates the first sample to be tested and a first fluorescence signal generated by the first fluorescent reagent when the light emitted by the light emitting component irradiates the first sample to be tested.

40. The sample analyzer of claim 39, wherein the first reaction device is configured to provide a reaction site for the first reaction solution, the first hemolytic reagent and the second fluorescent reagent to prepare the first sample to be tested;
the first optical signal further comprises a second fluorescence signal generated by the second fluorescent reagent when the light emitted by the light emitting component irradiates the first sample to be tested;
the controller obtains first particle information of the first sample to be tested through parsing the first optical signal fed back from the light receiving component:
first blast information and first ghost region information through parsing the first side scatter signal and the first fluorescence signal, and second ghost region information through parsing the second fluorescence signal; and
the second ghost region information is deducted from the first blast information and the first ghost region information so as to obtain blast information of the first sample to be tested.

41. The sample analyzer of any one of claims 33 to 40, wherein the second reaction device comprises a third reaction cell, and comprises at least one of a fourth reaction cell and a fifth reaction cell, the third reaction cell is configured to provide a reaction site for the sample and the first type of reagents to prepare the second sample to be tested, the fourth reaction cell is configured to provide a reaction site for the sample and a second type of reagents to prepare a third sample to be tested, and the fifth reaction cell is configured to provide a reaction site for the sample and a third type of reagents to prepare a fourth sample to be tested;
the first sample transfer assembly is further configured to transfer the third sample to be tested or the fourth sample to be tested from the second reaction device to the flow cell;
the flow cell is further configured to pass the third sample to be tested or the fourth sample to be tested through under thronging of a sheath liquid, the light emitting component is further configured to emit light towards the third sample to be tested or the fourth sample to be tested in the flow cell, and the light receiving component is further configured to receive a third optical signal generated when light emitted by the light emitting component passes through the third sample to be tested, or a fourth optical signal generated when the light emitted by the light emitting component passes through the fourth sample to be tested; and
the controller is further configured to perform at least one parsing action based on information fed back from the light receiving component as follows:
obtaining third particle information of the third sample to be tested through parsing the third optical signal fed back from the light receiving component, the third particle information comprising at least basophil information; and
obtaining fourth particle information of the fourth sample to be tested through parsing the fourth optical signal fed back from the light receiving component, the fourth particle information comprising reticulocyte information.

42. The sample analyzer of claim 41, wherein when sample testing items comprise a blast testing item and a routine blood testing item, the controller is configured to control the sample dispensing device to perform the following actions in sequence: aspirating the sample from the sample container, aspirating the antibody reagent from a first reagent container, dispensing the aspirated antibody reagent and part of the sample to the first reaction device, and dispensing part of the aspirated sample to the second reaction device, wherein an amount of the sample aspirated at one time by the sample dispensing device from the sample container is greater than or equal to a sum of an amount of the sample dispensed to the first reaction device and an amount of the sample dispensed to the second reaction device; or
when sample testing items comprise a blast testing item and a routine blood testing item, the controller is configured to control the sample dispensing device to perform the following actions in sequence: aspirating the sample from the sample container, dispensing part of the aspirated sample to the second reaction device, aspirating the antibody reagent from a first reagent container, and dispensing the aspirated antibody reagent and part of the sample to the first reaction device, wherein an amount of the sample aspirated at one time by the sample dispensing device from the sample container is greater than or equal to a sum of an amount of the sample dispensed to the first reaction device and an amount of the sample dispensed to the second reaction device; or
when sample testing items comprise a blast testing item and a routine blood testing item, the controller is configured to control the sample dispensing device to perform the following actions in sequence: aspirating a first sample from the sample container, aspirating the antibody reagent from a first reagent container, dispensing the aspirated antibody reagent and at least part of the first sample to the first reaction device, aspirating a second sample from the sample container, and dispensing at least part of the aspirated second sample to the second reaction device; or
when sample testing items comprise a blast testing item and a routine blood testing item, the controller is configured to control the sample dispensing device to perform the following actions in sequence: aspirating a first sample from the sample container, dispensing at least part of the aspirated first sample to the second reaction device, aspirating a second sample from the sample container, aspirating the antibody reagent from a first reagent container, and dispensing the aspirated antibody reagent and at least part of the second sample to the first reaction device.

43. The sample analyzer of claim 42, wherein when the sample aspirated at one time by the sample dispensing device from the sample container is respectively dispensed to the first reaction device and the second reaction device, the sample dispensing device aspirates the sample from the sample container at one time in an amount less than or equal to 200 µL.

44. The sample analyzer of claim 41, wherein the second reaction device comprises at least the third reaction cell, and the controller is further configured to: deduct abnormal lymphocyte data in the second particle information from the blast information of the first particle information, so as to obtain blast measurement data; and/or
the second reaction device comprises at least the fourth reaction cell, and the controller is further configured to: deduct basophil data in the third particle information from the blast information of the first particle information, so as to obtain blast measurement data.

45. The sample analyzer of any one of claims 33 to 40, wherein the controller is further configured to: control an amount of the antibody reagent dispensed to the first reaction device by the sample dispensing device to be less than 5 µL during a sample dispensing process of a single blast testing item; and/or
the controller is further configured to: control an amount of the antibody reagent dispensed to the first reaction device to be 5 µL ± 2 µL during an antibody reagent dispensing process of a single blast testing item.

46. The sample analyzer of any one of claims 33 to 40, wherein the sample analyzer further comprises a hemoglobin detection device, the sample dispensing device is further configured to dispense at least part of the aspirated sample to the hemoglobin detection device, the hemoglobin detection device is configured to measure hemoglobin parameters of a fifth sample to be tested that is at least prepared from the sample and a fourth type of reagents, and the controller is further configured to: obtain hemoglobin information of the fifth sample to be tested through parsing information fed back from the hemoglobin detection device; and/or the sample analyzer further comprises an impedance detection device which is configured to measure a sixth sample to be tested that is at least prepared from the sample and a fifth type of reagents, and the controller is further configured to: obtain platelet information and/or erythrocyte information of the sixth sample to be tested by parsing the information fed back from the impedance detection device.

47. The sample analyzer of any one of claims 33 to 40, wherein measurement of a sample in a sample container by the sample analyzer outputs at least two types of testing results as follows:
blast testing results and routine blood testing results; and/or
measurement of a sample aspirated at one time by the sample dispensing device from a sample container by the sample analyzer outputs at least two types of testing results as follows: blast testing results and routine blood testing results.

48. The sample analyzer of any one of claims 33 to 40, wherein the sample analyzer further comprises a recognition device which is configured to recognize the sample container, and the controller is further configured to: obtain at least information of testing items to be tested for the sample in the sample container based on the information fed back from the recognition device, and control the sample analyzer to perform a blast testing and/or a routine blood testing on the sample in the sample container based on the information of the testing items to be tested; and/or
the sample analyzer further comprises a human-computer interaction device which comprises a blast testing mode and a routine blood testing mode, and the controller is further configured to:
control the sample analyzer to perform a blast testing and/or a routine blood testing on the sample in the sample container based on the testing mode selected by an operator at the human-computer interaction device.
